# EUROPÄISCHE PATENTSCHRIFT

(11) **EP 2 997 820 B1**
(45) Veröffentlichungstag und Bekanntmachung des Hinweises auf die Patenterteilung: **27.07.2016**
(21) Anmeldenummer: 14185558.5
(22) Anmeldetag: 19.09.2014
(51) Int. Cl.: A01G 23/095

(54) **Greifzange mit Entastungsfunktion, damit versehenes Vollernteaggregat sowie Holzvollernter**
Gripping tongs with limbing function, complete harvesting device with same and wood harvester
Pince de préhension ayant une fonction d'émondage, arracheuse-chargeuse et abatteuse ainsi équipées

(43) Veröffentlichungstag der Anmeldung: 23.03.2016
(73) Patentinhaber: HEME Gmbh, 9412 St. Margarethen (AT)
(72) Erfinder: Baumgartner, Hannes, 9412 St. Margarethen (AT)
(74) Vertreter: Flügel Preissner Schober Seidel

(56) Entgegenhaltungen:
- EP-A2- 2 454 935
- WO-A1-01/52632
- WO-A1-89/09685
- US-A- 3 757 837
- US-A1- 2014 069 554

## Beschreibung

Die Erfindung betrifft eine Greifzange zum Entasten und Transportieren eines Baumstammes. Die Greifzange umfasst einen Rahmen, wenigstens einen Greifschenkel, wenigstens ein Entastungsmesser und wenigstens eine Vorschubeinheit. Der Rahmen erstreckt sich in einer axialen Richtung. Der Greifschenkel ist um eine erste Drehachse schwenkbar an dem Rahmen gelagert und weist eine Greiffläche zum Halten des Baumstammes auf. Das Entastungsmesser weist eine Schneide zum Abscheren von Ästen beim Bewegen des Baumstammes in der axialen Richtung auf. Die Vorschubeinheit dient zum Bewegen des Baumstammes in der axialen Richtung. Ferner betrifft die Erfindung Vorrichtungen, die mit der Greifzange versehen sind.

Solche Greifzangen werden beispielsweise bei Harvesteraggregaten, die auch als Vollernteaggregate bezeichnet werden, verwendet. Derartige Vollernteaggregate werden mit speziellen Arbeitsfahrzeugen, sogenannten Harvestern, verwendet. Harvester werden auch als Holzvollernter bezeichnet.

DE 10 2012 003 653 A1 offenbart eine Greifzange der eingangs genannten Art. Die Greifzange umfasst eine Vorschubeinrichtung zum Bewegen eines Baumstammes. Die Vorschubeinrichtung besteht aus zwei einander gegenüberliegenden Rollen, die in Kontakt mit dem Stamm eines Baumes gebracht werden. Der Baumstamm wird durch Rotation der Rollen durch die Greifzange gefördert. Zwei Entastungsmesser entfernen an dem Baumstamm befindliche Äste und Zweige. Die Entastungsmesser sind an Greifschenkeln starr angeordnet.

US 3 797 539 A beschreibt ein Vollernteaggregat mit Greifschenkeln und daran angeordneten Entastungsmessern. Die Entastungsmesser sind starr mit Greifschenkeln verbunden. Ein ähnliches Vollernteaggregat ist aus WO 00/15025 A1 bekannt.

DE 10 2011 108 812 A1 offenbart eine Vorschubeinheit für einen Vollernter. Die Vorschubeinheit umfasst an Kniehebeln angeordnete Vorschubwalzen. Die Kniehebel sind mittels eines Zugmittelgetriebes synchronisiert und erlauben eine große Öffnungsweite. Somit sind unterschiedliche Stammdurchmesser greifbar, wobei die Vorschubwalzen stets an dem Stamm anliegen.

DE 10 2010 010 939 A1 offenbart eine Vorschubwalze für das Transportieren eines Baumstammes. Die Vorschubwalze weist mittels einer Nut-Feder-Verbindung befestigte Zahnleisten auf, die an dem Baumstamm anliegen.

Ein Vollernteaggregat mit einer Vorschubeinheit ist aus WO 99/25526 A1 bekannt. Das Vollernteaggregat weist Greifschenkel auf, an denen Entastungsmesser starr angeordnet sind. Die Vorschubeinheit ist mit einer Transportkette ausgestattet, um einen Baumstamm zu Bewegen und zu Entasten.

Ein Harvester-Aggregat, das zwei Paar Greifschenkel umfasst, die um eine Drehachse schwenkbar an einem Rahmen angeordnet sind, wird in WO 01/52632 A1 beschrieben. Zwischen den Greifschenkel sind Antriebsrollen angeordnet, die zum Bewegen eines Baumstamms in der axialen Richtung dienen. Die Antriebsrollen sind starr mit den Greifschenkel verbunden. Das in der axialen Richtung vordere Paar Greifschenkel ist zugleich als Entastungsmesser ausgestaltet. Um ein zuverlässiges Entasten sicherzustellen, sind an dem Rahmen zudem ein feststehendes Entastungsmesser und ein federbelastetes Entastungsmesser angeordnet.

Greifzangen sind als gesonderte Einheiten erhältlich oder Teil von Vollernteaggregaten, wie sie aus dem zuvor geschilderten Stand der Technik bekannt sind. Holzvollernter mit solchen Vollernteaggregaten erreichen einen immer größeren Anteil bei der Ernte von Holz. Eine zuverlässige Funktion der Greifzangen oder der damit ausgestatteten Vollernteaggregate auch unter widrigen Umweltbedingungen, wie sie etwa durch Kälte und Schmutz verursacht werden, sowie ein geringer Wartungsaufwand sind hierbei von großer Bedeutung.

Es ist Aufgabe der Erfindung eine Greifzange anzugeben, die insbesondere über eine große Haltbarkeit, eine große Unempfindlichkeit gegenüber Umwelteinflüssen und einen geringen Wartungsaufwand verfügt.

Die Aufgabe wird durch eine Greifzange gemäß Anspruch 1 gelöst. Vorteilhafte Weiterbildungen der Greifzange sind Gegenstand der Ansprüche 2 bis 12. Vorteilhafte Verwendungen der Greifzange sind Gegenstand der Ansprüche 13 bis 15.

Die Erfindung schafft eine Greifzange zum Entasten und Transportieren eines Baumstammes. Die Greifzange umfasst einen Rahmen, wenigstens einen Greifschenkel, wenigstens ein Entastungsmesser und wenigstens eine Vorschubeinheit. Der Rahmen erstreckt sich in einer axialen Richtung. Der Greifschenkel ist um eine erste Drehachse schwenkbar an dem Rahmen gelagert und weist eine Greifbacke, die insbesondere eine Greiffläche umfasst, zum Halten des Baumstammes auf. Das Entastungsmesser weist eine Schneide zum Abscheren von Ästen beim Bewegen des Baumstammes in der axialen Richtung auf. Die Vorschubeinheit dient zum Bewegen des Baumstammes in der axialen Richtung. Das Entastungsmesser ist an dem Greifschenkeln beweglich angeordnet. Das Entastungsmesser ist entgegen der Wirkung einer Rückstellkraft von einer ersten Stellung in eine zweite Stellung bewegbar, und zwar relativ zu dem Greifschenkel. Das Entastungsmesser ist an dem Greifschenkel angeordnet. Im Unterschied zu den bekannten Greifzangen ist das Entastungsmesser jedoch nicht starr mit dem Greifschenkel verbunden sondern relativ dazu beweglich. Somit kann etwa auf zusätzliche Aktoren für das Entastungsmesser verzichtet werden, was die Greifzange leichter und auch weniger wartungsaufwendig macht. Dennoch kann das Entastungsmesser sich an die in Längsrichtung des Baumstammes veränderliche Oberfläche anpassen. Das Entastungsmesser ermöglicht eine gleichmäßige Resthöhe der abgescherten Astreste über den gesamten Stamm. Die Gestaltung der Greifzange ermöglicht ein problemloses Greifen, Aufnehmen, Manipulieren und Ablegen von Baumstämmen und anderen zylinderartigen Körpern. Die Greifzange verfügt zudem über eine große Öffnungsweite in Bezug auf den maximal zu entastenden Durchmesser eines Baumstammes (Entastungsdurchmesser). Die große Öffnungsweite erleichtert das Aufnehmen von liegenden Baumstämmen. Bei einer Kombination der Greifzange mit einer Fälleinheit vereinfacht sich das Greifen von zu fällenden Bäumen. Durch die Integration der Vorschubeinheiten und des Entastungsmessers werden Störkanten beim Greifen minimiert. Dadurch wird es auch möglich, einzelne Holzstämme oder einen Bündel von Holzstämmen aus einen bereits bestehenden Holzstapel zu entnehmen. Das Entastungsmesser ist bei einem Eintauchen in einen Holzstapel vor abgleitenden Baumstämmen geschützt. Das Rückstellglied erspart einen separaten Aktor. Der Anpressdruck der Vorschubeinheit kann daher erhöht werden, ohne dass sich der Anpressdruck der Entastungsmesser wesentlich erhöht. Andernfalls könnte der Baumstamm in der Greifzange stecken bleiben.

Vorzugsweise ist das Entastungsmesser um die erste Drehachse schwenkbar angeordnet. Diese Anordnung des Entastungsmessers erlaubt eine noch gleichmäßigere Resthöhe.

Vorzugsweise umfasst die Greifzange ein Rückstellglied mit einem Rückstellelement, insbesondere eine Druckfeder, zum Erzeugen der Rückstellkraft. Ein Rückstellglied, insbesondere in Gestalt einer Feder, ist nahezu wartungsfrei. Entfernen von Holzresten reicht in der Regel aus.

Es ist bevorzugt, dass das Rückstellglied eine Schutzabdeckung, insbesondere ein Schutzrohr, für das Rückstellelement, insbesondere die Druckfeder, aufweist. Die Schutzabdeckung kann das Eindringen von Schmutz und Holzresten verhindern. Die Wartung der Greifzange wird zusätzlich vereinfacht.

Vorzugsweise umfasst die Greifzange einen zweiten Greifschenkel, wobei der erste Greifschenkel und der zweite Greifschenkel in der axialen Richtung beabstandet sind. Insbesondere ist die Vorschubeinheit in der axialen Richtung zwischen dem ersten Greifschenkel und dem zweiten Greifschenkel angeordnet. Die Greifzange kann insbesondere eine Trägerplatte umfassen, die zwischen dem ersten Greifschenkel und dem zweiten Greifschenkel angeordnet ist und die ausgebildet ist, die Vorschubeinheit zu lagern. Die Trägerplatte bildet bevorzugt mit einem Greifschenkel einen Zwischenraum, der derart ausgebildet ist, dass ein Greifschenkel vorzugsweise mit Entastungsmesser in den Zwischenraum aufnehmbar ist. Die Trägerplatte weist insbesondere eine Anschlagöffnung und/oder eine Befestigungsöffnung für die Vorschubeinheit auf. Zudem kann die Trägerplatte eine zweite Lageröffnung zum Bilden einer Drehachse aufweisen. Durch eine vorzugsweise anliegende Anordnung der Entastungsmesser am ersten Greifschenkel und der vorzugsweisen Anordnung der Vorschubeinheit zwischen dem ersten Greifschenkel und dem zweiten Greifschenkel, kann eine zusammenhängende Einheit gebildet werden, die den auftretenden Entastungskräften entgegensteht. Zudem werden insbesondere die Befestigungen der Entastungsmesser und der Vorschubeinheit, etwa deren Lager, weniger belastet, was wiederum die Haltbarkeit erhöht und den Wartungsaufwand verringern kann.

Es ist bevorzugt, dass die Vorschubeinheit um eine Drehachse relativ zu dem Greifschenkel um eine Mittelstellung drehbar gelagert ist. Vorzugsweise ist die Vorschubeinheit in einem Winkelbereich von ±15°, insbesondere in einem Winkelbereich von ±5° um die Mittelstellung drehbar gelagert. Vorzugsweise ruft eine auf die Vorschubeinheit ausgeübte Kraft eine Drehbewegung der Vorschubeinheit hervor. Vorzugsweise ist ein Dämpfungselement zum Begrenzen und Dämpfen der Drehbewegung vorgesehen. Die drehbare Lagerung ermöglicht ein gleichmäßiges Erfassen des Baumstammes durch die Vorschubeinheit. Somit wird die Vorschubeinheit gleichmäßiger beansprucht und die Betriebssicherheit kann gesteigert werden, indem etwa ein Durchrutschen verhindert wird. Die Nutzung der Anpresskraft an den Baumstamm verringert die Zahl der benötigten Aktoren. Beide Maßnahmen können daher den Wartungsaufwand verringern und die Haltbarkeit der Greifzange erhöhen.

Vorzugsweise umfasst die Greifzange eine Abdeckung, die an dem Greifschenkel angeordnet ist. Die Abdeckung erstreckt sich insbesondere zwischen dem ersten Greifschenkel und dem zweiten Greifschenkel. Die Abdeckung kann das Eindringen von Schmutz oder Holzresten in die Greifzange verhindern. Der Wartungsaufwand kann weiter verringert und die Haltbarkeit weiter erhöht werden.

Es ist bevorzugt, dass die Vorschubeinheit eine Vorschubwalze umfasst. Bevorzugt ist die Vorschubwalze zwischen dem ersten Greifschenkel und dem zweiten Greifschenkel angeordnet. Die Vorschubeinheit kann so ebenfalls durch die Abdeckung vor Schmutz und Holzresten geschützt werden.

Die Vorschubwalze umfasst bevorzugt einen Walzenkörper. Insbesondere umfasst die Vorschubwalze ein Vorschubelement. Die Vorschubwalze kann einen Stützring aufweisen. Das Vorschubelement ist bevorzugt geeignet, den Baumstamm formschlüssig zu erfassen. Der Stützring liegt vorzugsweise an einer Umfangsfläche des Walzenkörpers an. Der Stützring ist bevorzugt elastisch verformbar. Der Stützring dient insbesondere dem Ausüben einer Rückstellkraft auf das Vorschubelement. Die Vorschubelemente werden gegen eine Rückstellkraft gegen den Baumstamm gedrückt. Somit liegen die Vorschubelemente stets optimal an dem Baumstamm an, wodurch die Kraftübertragung zuverlässiger werden kann.

Vorzugsweise umfasst der Walzenkörper eine Grundplatte, die zum Anschließen eines Antriebs dient. Der Walzenkörper hat insbesondere eine Deckplatte und bevorzugt eine Mehrzahl von Umfangsplatten. Die Umfangsplatten können zwischen der Grundplatte und der Deckplatte angeordnet sein. Insbesondere liegt der Stützring an einer der Umfangsplatten an. Der Walzenkörper kann einen Abrollvorsprung für das Abrollen des Vorschubelements aufweisen. Insbesondere hat der Walzenkörper einen Anschlagvorsprung, der geeignet ist eine Bewegung des Vorschubelements in Umfangsrichtung des Walzenkörpers zu begrenzen. Bevorzugt sind Abrollvorsprünge und/oder Anschlagvorsprünge in Umfangsrichtung des Walzenkörpers vorgesehen. Insbesondere sind die Abrollvorsprünge und die Anschlagvorsprünge im Wechsel vorgesehen. Vorzugsweise sind die Abrollvorsprünge und/oder die Anschlagvorsprünge jeweils an der Grundplatte und der Deckplatte vorgesehen. Der Walzenkörper kann eine Befestigungsöffnung zum Befestigen des Vorschubelements aufweisen. Insbesondere kann der Walzenkörper eine Zapfenöffnung zum Aufnehmen eines Zapfens aufweisen. Es ist bevorzugt, dass jeweils zwei Umfangsplatten eine Befestigungsöffnung und/oder eine Zapfenöffnung bilden.

Vorzugsweise weisen die Grundplatte und/oder die Deckplatte Öffnungen in axialer Richtung auf. Die Öffnungen sind insbesondere in Umfangsrichtung des Walzenkörpers an der Position der Abrollvorsprünge vorgesehen. Alternativ oder zusätzlich können die Öffnungen radial nach innen zu den Abrollvorsprüngen vorgesehen sein. Vorzugsweise weisen die Umfangsplatten dazu passende Vorsprünge auf. Die Vorsprünge sind insbesondere in die Öffnungen aufgenommen.

Einzelne Platten sind fertigungstechnisch einfach mittels Laserschneiden herstellbar. Die unterschiedlichen Platten und/oder Stäbe können zu Baugruppen, wie beispielsweise dem Walzenkörper, zusammengesetzt werden. Je nach Unterteilung können mehrere Platten und/oder Stäbe zu größeren oder kleineren Baugruppen zusammengefasst werden. Insbesondere können die Baugruppen nach Verschleiß zusammengefasst werden. Eine solche modulare Bauweise kann die Wartung und die Reparatur vereinfachen, da lediglich einzelne Teile der Baugruppen ausgetauscht werden. Die Vorschubwalze kann daher einfacher gewartet werden und ist zudem an unterschiedliche Parameter, wie Stammgröße, Holzart, Holzschonung, Anpresskraft und dergleichen, anpassbar.

Es ist bevorzugt, dass das Vorschubelement in Umfangsrichtung des Walzenkörpers, vorzugsweise geringfügig, verschiebbar ist. Alternativ oder zusätzlich kann das Vorschubelement um die axiale Richtung des Walzenkörpers schwenkbar sein. Weiter bevorzugt umfasst das Vorschubelement ein Zahnglied zum formschlüssigen Erfassen des Baumstammes. Insbesondere hat das Vorschubelement ein Stützglied zum Anlegen an den Stützring. Vorzugsweise weist das Vorschubelement einen Zapfen auf. Es ist bevorzugt, dass das Vorschubelement mit einem Gewindebolzen an der Befestigungsöffnung befestigt ist. Der Zapfen kann in der Zapfenöffnung aufgenommen sein. Das Zahnglied kann bezüglich einer Mittellängsebene symmetrisch ausgebildet sein. Das Zahnglied weist vorzugsweise wenigstens einen Erfassungsabschnitt auf. Der Erfassungsabschnitt hat insbesondere zwei Zähne. Die Zahnhöhe zweier Zähne unterschiedlicher Erfassungsabschnitte kann unterschiedlich sein. Bevorzugt nimmt die Zahnhöhe der Zähne unterschiedlicher Erfassungsabschnitte zu einer Mittelquerebene hin ab. Insbesondere ist der Zahnabstand zwischen den zwei Zähnen eines Erfassungsabschnittes unterschiedlich zu dem Zahnabstand zwischen den zwei Zähnen eines anderen Erfassungsabschnittes. Bevorzugt nimmt der Zahnabstand zu der Mittelquerebene hin ab.

Die zuvor genannten Maßnahmen können die Zuverlässigkeit der Kraftübertragung zwischen Baumstamm und Vorschubwalze erhöhen. Ein Durchrutschen kann verhindert werden.

Vorzugsweise umfasst die Greifzange ein Zugmittelgetriebe zur Synchronisierung der Schwenkbewegung der Greifschenkel. Insbesondere umfasst das Zugmittelgetriebe ein Abrollglied, das mit dem Greifschenkel gekoppelt ist und das eine Abrollfläche aufweist. Das Abrollglied kann mit dem Greifschenkel direkt oder indirekt mit einem Abstand gekoppelt sein. Vorzugsweise weist das Zugmittelgetriebe ein an der Abrollfläche anlegbares Zugmittel auf, das einen Endabschnitt umfasst. Das Zugmittelgetriebe kann ein Befestigungsglied zur Befestigung des Endabschnitts aufweisen. Insbesondere ist das Befestigungsglied an dem Greifschenkel und/oder der Trägerplatte zum Einstellen der Spannung des Zugmittels vorgesehen. Es ist bevorzugt, dass das Befestigungsglied einen Befestigungsflansch, der an dem Greifschenkel und/oder der Trägerplatte angeordnet ist umfasst. Ferner kann das Befestigungsglied einen Zuganker, der an dem Befestigungsflansch gelagert ist und der zum Befestigen des Endabschnitts geeignet ist, umfassen. Vorzugsweise umfasst das Befestigungsglied ein Spannelement zum Einstellen der Spannung des Zugmittels. Das Befestigungsglied weist insbesondere ein Druckdämpfungsglied auf. Das Druckdämpfungsglied umfasst vorzugsweise eine Tellerfeder. Vorzugsweise ist das Druckdämpfungsglied zwischen dem Spannelement und dem Befestigungsflansch an dem Zuganker vorgesehen. Insbesondere ist die Tellerfeder zwischen dem Spannelement und dem Befestigungsflansch an dem Zuganker vorgesehen. Die Synchronisierung erlaubt ein Greifen des Baumstammes mit geringerem Einschwenkfehler. Insbesondere wird dadurch der Baumstamm gleichmäßig ergriffen und kann so automatisch in der Greifzange zentriert werden. Somit kann sichergestellt werden, dass das Entasten im Wesentlichen gleichmäßig um den ganzen Stammumfang herum erfolgt. Die Trennung von Abrollglied und Befestigungsglied erlaubt eine zuverlässige Befestigung und eine höhere Zugkraft. Eine Druckdämpfung nimmt bevorzugt Kräfte auf, die bei einer ruckartigen Bewegung entstehen können. Das Zugmittel wird so geschont und kann weniger Wartung benötigen. Zudem kann die Haltbarkeit der Greifzange erhöht werden.

Vorzugsweise umfasst das Abrollglied ein Abrollsegment, das die Abrollfläche aufweist. Insbesondere hat das Abrollglied eine Mehrzahl von Stiften zum Stützen des Abrollsegments. Die Abrollfläche kann halbkreisbogenförmig gekrümmt sein. Das Abrollglied ist aus mehreren Abrollsegmenten zusammengesetzt, die gestapelt werden. Die Abrollsegmente können beispielsweise mittel Laserschneiden gefertigt werden. Auch ist es möglich die Abrollsegmente je nach gewünschter Synchronisierung unterschiedlich auszuwählen und so eine angepasste Zugkraft im Zugmittel zu erreichen. Vorzugsweise weist der Rahmen eine Symmetrieebene auf, zu der die Greifzange in der axialen Richtung betrachtet wenigstens teilweise symmetrisch ausgebildet ist.

Die Greifzange kann bezüglich einer Symmetriebene, die im Wesentlichen durch die Mittellängsebene des Rahmens gebildet wird symmetrisch sein. Symmetrisch bedeutet hierin auch, dass ein axialer Versatz möglich ist. Ist also beispielsweise ein erster Greifschenkel in der axialen Richtung zu einem zweiten Greifschenkel versetzt und ansonsten symmetrisch zu dem zweiten Greifschenkel, wie wenn er in derselben Querebene des Rahmens angeordnet wäre, so wird die Greifzange ebenfalls als symmetrisch bezeichnet. Der Begriff "teilweise" ist so zu verstehen, dass nicht die Greifzange als ganzes symmetrisch ausgebildet sein muss. Vielmehr reicht bereits die Symmetrie einzelner Merkmale der Greifzange aus, beispielsweise die Anordnung mehrerer Entastungsmesser.

Eine Greifzange entsprechend der vorliegenden Erfindung wird insbesondere bei einem Rückezug, einem Forwarder und/oder einer Seilbringungsanlage verwendet. Rückezug, Forwarder und Seilbringungsanlage werden hierin gemeinsam einfach als Rückezug bezeichnet.

Die Erfindung schafft ein Vollernteaggregat zum Ernten von Holz. Das Vollernteaggregat umfasst eine Fälleinheit und Greifzange entsprechend der vorliegenden Erfindung. Die Fälleinheit dient zum Fällen von Bäumen. Vorzugsweise umfasst das Vollernteaggregat einen Kippmechanismus zum Kippen des Vollernteaggregates um eine im Wesentlichen horizontale Achse.

Vorzugsweise umfasst die Fälleinheit eine Säge und/oder eine Schneide. Vorzugsweise umfasst das Vollernteaggregat eine Messeinheit zum Bestimmen der Größen des Baumstammes.

Die Erfindung schafft zudem einen Holzvollernter mit einem Vollernteaggregat entsprechend der vorliegenden Erfindung.

Die genannten Vorteile können durch die Verwendung der erfindungsgemäßen Greifzange bei einem Rückezug, einem Vollernteaggregat und einem Vollernter ebenfalls verwirklicht werden.

Im Folgenden werden die Richtungsangaben "oben", "unten", "vorne", "hinten", "rechts" und "links" wie folgt definiert. "Oben" bezeichnet die Richtung von dem Erdboden weg. "Unten" bezeichnet die Richtung zu dem Erdboden hin. "Vorne" bezeichnet die Richtung, in welche die Schneiden der Entastungsmesser zeigt. "Hinten" bezeichnet die Richtung, in welche entastet wird. Diese wird auch "Entastungsrichtung" genannt. "Rechts" und "links" bezeichnen die Richtungen weg von der Greifzange, wenn diese von der Vorderseite betrachtet wird, also mit Blickrichtung nach hinten.

Ein Ausführungsbeispiel der Erfindung wird nachfolgend anhand der beigefügten Zeichnungen näher erläutert. Darin zeigt:
- Fig. 1: eine Perspektivansicht einer Greifzange im geschlossenen Zustand;
- Fig. 2: eine Perspektivansicht der Greifzange aus Fig. 1 von unten;
- Fig. 3: eine Perspektivansicht der Greifzange im geöffneten Zustand;
- Fig. 4: eine Perspektivansicht der Greifzange von unten mit einem Entastungsmesser in einer ersten Stellung;
- Fig. 5: eine Perspektivansicht der Greifzange von unten mit dem Entastungsmesser in einer zweiten Stellung;
- Fig. 6: eine Perspektivansicht einer Greifzangenhälfte;
- Fig. 7: eine Perspektivansicht der Greifzangenhälfte aus Fig. 6 ohne Greifschenkel;
- Fig. 8: eine Perspektivansicht der Greifzangenhälfte aus Fig. 6;
- Fig. 9: eine vergrößerte Teilansicht der Greifzangenhälfte aus Fig. 6;
- Fig. 10: eine vergrößerte Teilansicht eines Zugmittelgetriebes;
- Fig. 11A: eine Ansicht eines Zugmittels und eines Abrollgliedes;
- Fig. 11B: eine Ansicht des Abrollgliedes;
- Fig. 12: eine Vorderansicht einer Vorschubeinheit;
- Fig. 13: ein Bereich des Querschnitts der Vorschubeinheit entlang der Linie A-A aus Fig. 12;
- Fig. 14: eine Perspektivansicht einer Vorschubwalze;
- Fig. 15: eine Vorderansicht der Vorschubwalze aus Fig. 14;
- Fig. 16: eine Vorderansicht der Vorschubwalze aus Fig. 14 anliegend an einem Baumstamm;
- Fig. 17: eine Seitenansicht der Vorschubwalze aus Fig. 14;
- Fig. 18: ein Querschnitt der Vorschubwalze entlang der Linie B-B aus Fig. 17;
- Fig. 19: eine Perspektivansicht eines Walzenkörpers;
- Fig. 20: eine Vorderansicht des Walzenkörpers aus Fig. 19;
- Fig. 21: eine Seitenansicht des Walzenkörpers aus Fig. 19;
- Fig. 22: eine Perspektivansicht eines Vorschubelements;
- Fig. 23: eine Perspektivansicht von unten des Vorschubelements aus Fig. 22;
- Fig. 24: eine Seitenansicht des Vorschubelements aus Fig. 22;
- Fig. 25: eine Draufsicht des Vorschubelements aus Fig. 22;
- Fig. 26: eine Vorderansicht des Vorschubelements aus Fig. 22;
- Fig. 27: eine vergrößerte Teilansicht des Bereichs X aus Fig. 16, und
- Fig. 28: einen vergrößerten Querschnitt im Bereich X aus Fig. 16 entlang der Linie B-B aus Fig. 17.

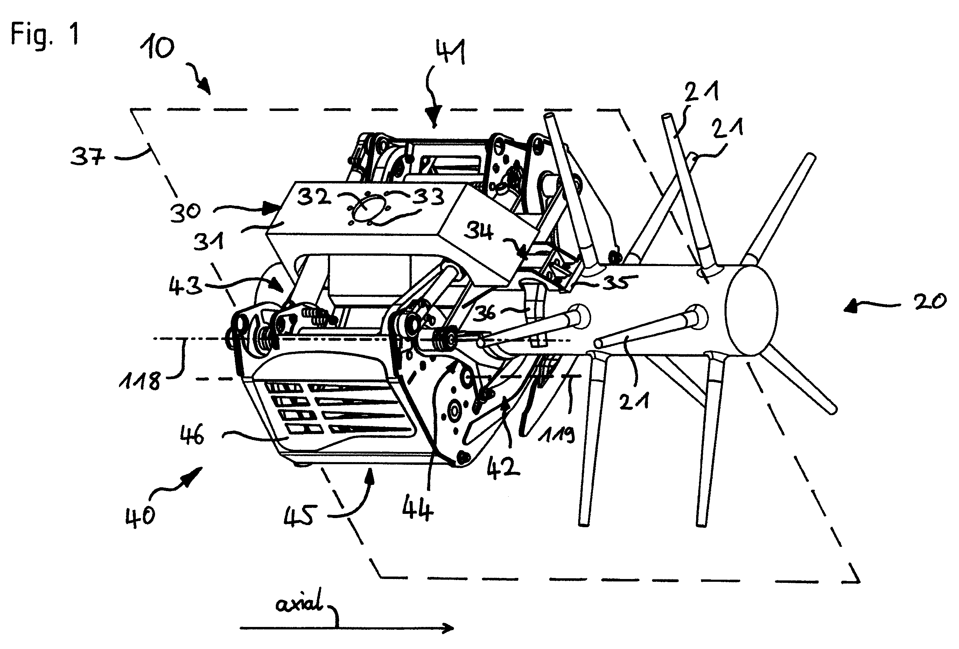

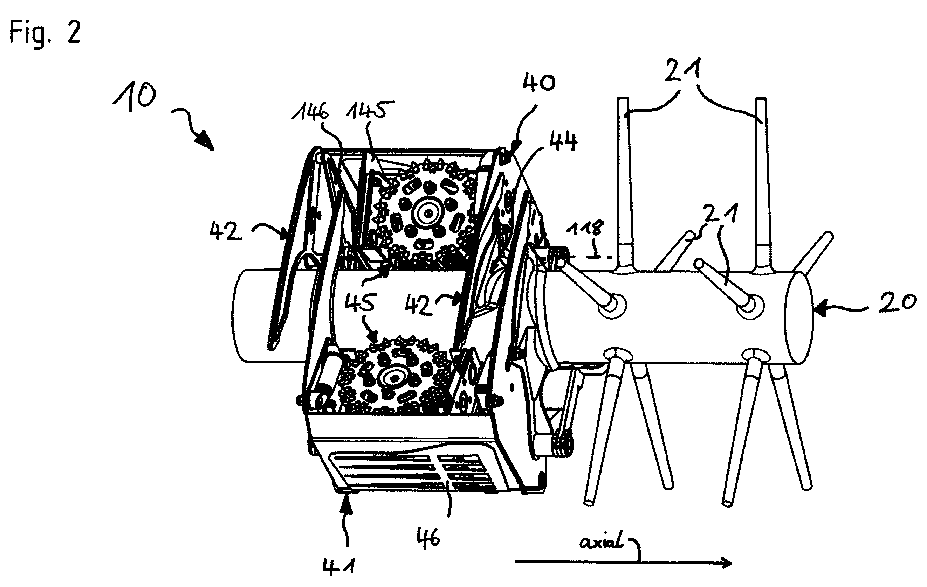

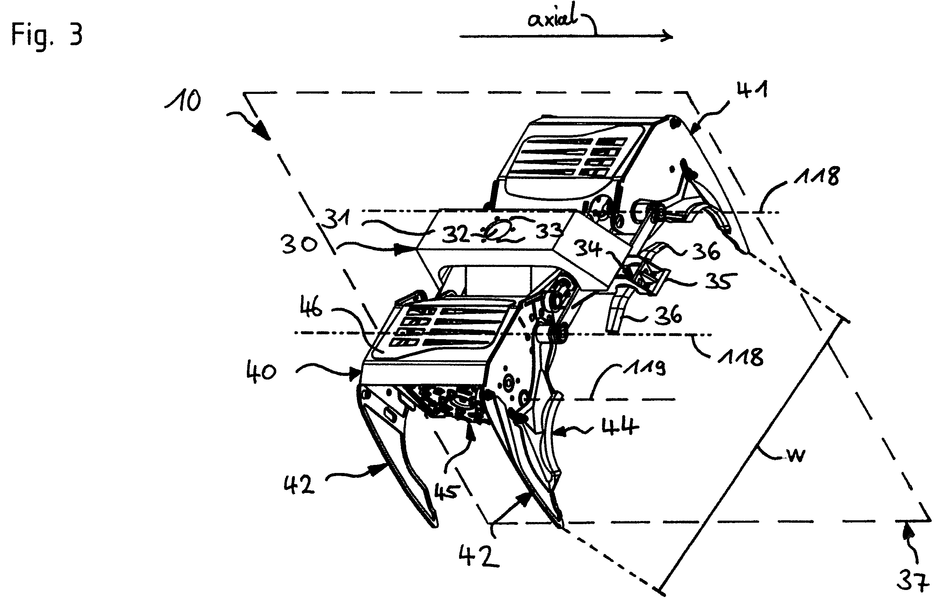

Es wird nachfolgend auf die Figuren 1 bis 5 Bezug genommen. Eine Greifzange 10 ist zum Greifen eines Baumstammes 20 mit Ästen 21 ausgebildet. Die Greifzange 10 umfasst einen Rahmen 30, eine erste Greifzangenhälfte 40 und eine zweite Greifzangenhälfte 41.

Der Rahmen 30 definiert eine axiale Richtung, die durch einen Pfeil mit der Bezeichnung "axial" dargestellt ist.
Der Rahmen 30 umfasst eine Befestigungsplatte 31, eine Entastungseinheit 34 und eine Symmetrieebene 37.

Die Befestigungsplatte 31 dient der Befestigung und ist mit einer Kupplungsöffnung 32 und Befestigungsöffnungen 33 versehen. Die Befestigungsplatte 31 stellt eine Schnittstelle zum Befestigen der Greifzange 10 an einem Arbeitsfahrzeug bereit. An der Kupplungsöffnung 32 können beispielsweise, hier jedoch nicht näher dargestellt, ein Schwingungsdämpfer oder ein Drehmodul zum Drehen der Greifzange 10 vorgesehen sein, die mittels Bolzen in den Befestigungsöffnungen 33 festgelegt werden.

Die Entastungseinheit 34 dient dem Entfernen der Äste 21 von dem Baumstamm 20. Die Entastungseinheit 34 umfasst ein starres Entastungsmesser 35 und zwei bewegliche Entastungsmesser 36. Das starre Entastungsmesser 35 ist relativ zu dem Rahmen 30 unbeweglich angeordnet. Die beweglichen Entastungsmesser 36 sind relativ zu dem Rahmen 30 bewegbar angeordnet. Insbesondere sind die beweglichen Entastungsmesser 36 schwenkbar.

Die Symmetrieebene 37 ist im Wesentlichen orthogonal zu der Befestigungsplatte 31 und eine Mittelebene der Befestigungsplatte 31. Die Befestigungsplatte 31 und die Entastungseinheit 34 sind symmetrisch bezüglich der Symmetrieebene 37 ausgebildet. Die erste Greifzangenhälfte 40 und die zweite Greifzangenhälfte 41 sind bezüglich der Symmetrieebene 37 bis auf einen axialen Versatz symmetrisch angeordnet. "Symmetrisch" ist hierin demnach zu verstehen als "symmetrisch bis auf einen axialen Versatz", wenn nicht anders angegeben. Die erste Greifzangenhälfte 40 und die zweite Greifzangenhälfte 41 müssen jedoch nicht symmetrisch zu der Symmetrieebene 37 ausgebildet sein. Das bedeutet, dass nicht alle Merkmale der ersten Greifzangenhälfte 40 bei der zweiten Greifzangenhälfte 41 verwirklicht sein müssen oder, falls sie verwirklicht sind, dass nicht alle Merkmale symmetrisch in Bezug auf Anordnung und/oder Orientierung zu ihren jeweiligen Spiegelmerkmalen sein müssen.

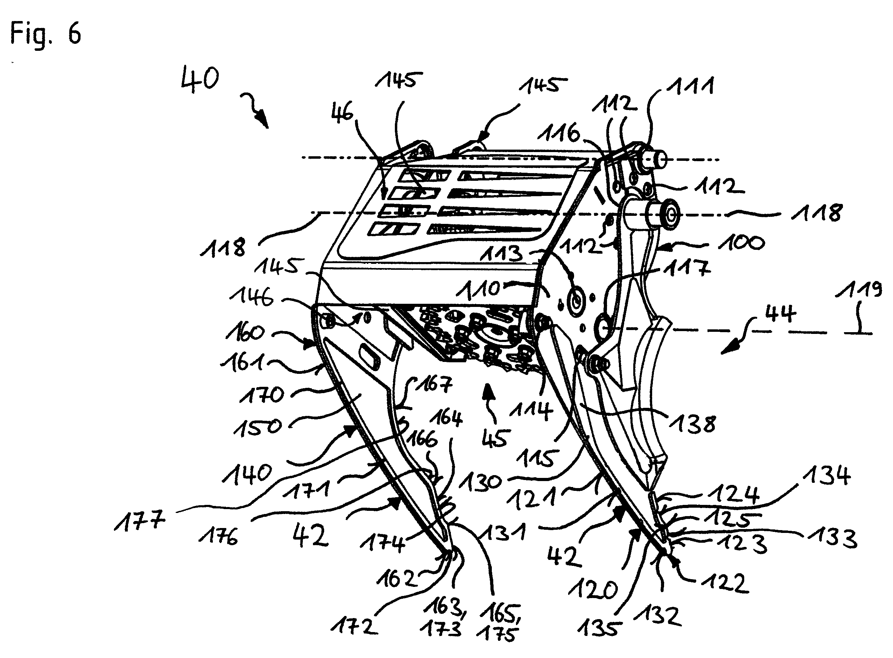

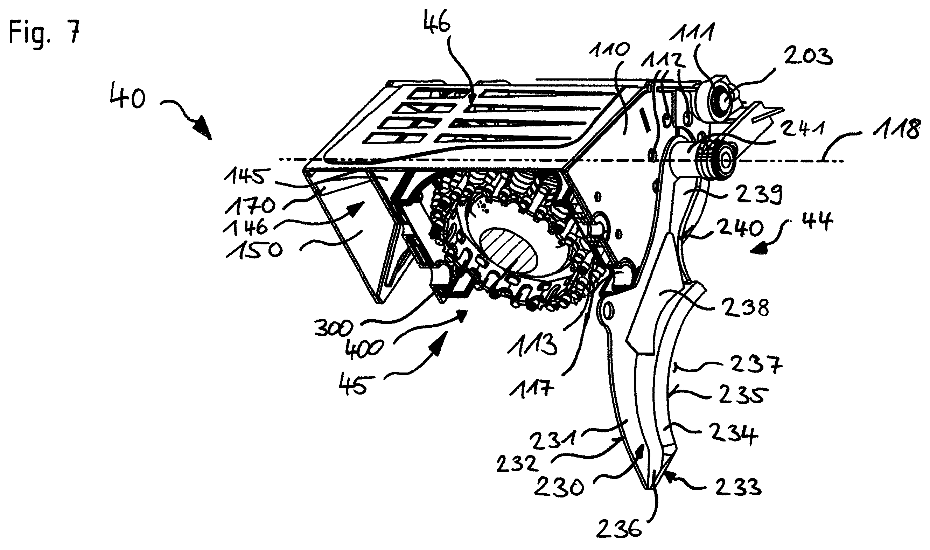

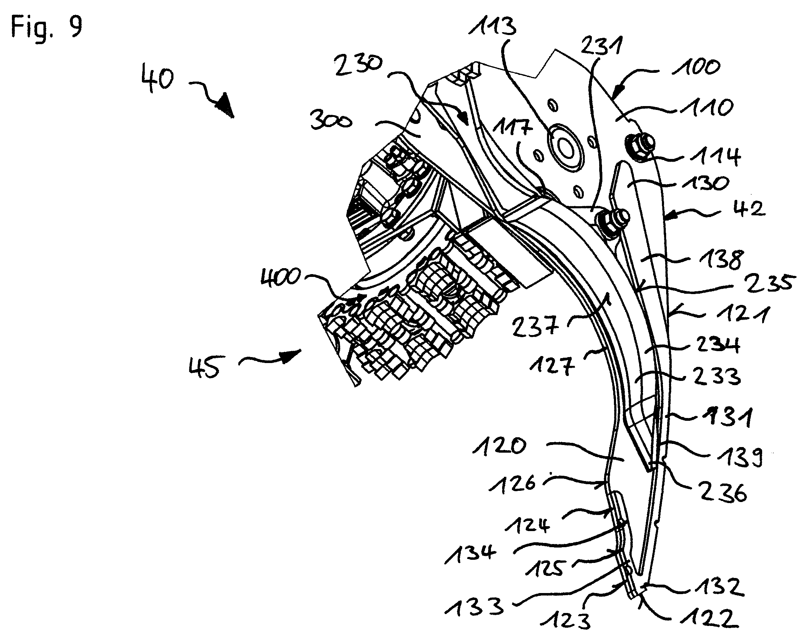

Nachfolgend wird daher lediglich die erste Greifzangenhälfte 40 anhand der Figuren 6 bis 9 erläutert.

Die erste Greifzangenhälfte 40 umfasst eine Greifeinheit 42, eine Antriebseinheit 43, eine Entastungseinheit 44 und eine Vorschubeinheit 45. An der Greifeinheit 42 kann eine Abdeckung 46 vorgesehen sein.

Die Greifeinheit 42 ist ausgebildet, den Baumstamm 20 zu greifen. Die Greifeinheit 42 umfasst einen ersten Greifschenkel 100, einen zweiten Greifschenkel 140 und eine Trägerplatte 145. Die Greifschenkel 100, 140 liegen in der Greifstellung an dem Baumstamm 20 an.

Der erste Greifschenkel 100 ist zum Greifen des Baumstammes 20 ausgebildet. Ferner ist der erste Greifschenkel 100 zum Befestigen, Lagern und/oder Anordnen anderer Komponenten, wie etwa der Antriebseinheit 43, der Entastungseinheit 44 und der Vorschubeinheit 45 vorgesehen. Der erste Greifschenkel 100 weist eine Seitenplatte 110, eine Greifbacke 120 und einen Beschlag 130 auf. Der erste Greifschenkel 100 ist orthogonal zu der axialen Richtung angeordnet.

Die Seitenplatte 110 dient der Befestigung, Lagerung und Anordnung verschiedener Komponenten. Die Seitenplatte 110 umfasst eine Antriebsöffnung 111, eine Mehrzahl von Stiftöffnungen 112, eine Anschlagöffnung 113, eine Befestigungsöffnung 114, eine Gleitöffnung 115 sowie eine erste Lageröffnung 116 und eine zweite Lageröffnung 117.

Die Antriebsöffnung 111 dient der Befestigung der Antriebseinheit 43. Insbesondere dient die Antriebsöffnung 111 der Befestigung einer Antriebskomponente, beispielsweise eines Hydraulikzylinders oder dergleichen.

Die Antriebsöffnung 111 ist an einem oberen Randbereich der Seitenplatte 110 angeordnet.

Die vorliegend fünf Stiftöffnungen 112 dienen der Befestigung von Stiften und sind zylinderförmig ausgebildet. Je nach Wunsch können auch mehr oder weniger Stiftöffnungen 112 vorgesehen sein. Die Stiftöffnungen 112 sind kreisbogenförmig um die erste Lageröffnung 116 angeordnet.

Die Anschlagöffnung 113 ist ausgebildet, mit einem Dämpfungselement zusammenzuwirken und eine Bewegung der Vorschubeinheit 45 zu begrenzen. Die Anschlagöffnung 113 ist an einem unteren Bereich der Seitenplatte 110 nahe der Greifbacke 120 angeordnet.

Die Befestigungsöffnung 114 dient der Befestigung der Entastungseinheit 44. Speziell ist die Befestigungsöffnung 114 ausgebildet, ein beaufschlagtes elastisches Element zu stützen. Die Befestigungsöffnung 114 ist an einem Randbereich der Seitenplatte 110 angrenzend an die Greifbacke 120 vorgesehen.

Die Gleitöffnung 115 ist ausgebildet, die Entastungseinheit 44 beweglich zu lagern. Die Gleitöffnung 115 ist als Langlochöffnung ausgebildet. Die Gleitöffnung erstreckt sich entlang einer gedachten Linie, welche in der Greifstellung die Befestigungsöffnung 114 mit dem gegriffenen Baumstamm 20 verbindet. Die Gleitöffnung 115 ist angrenzend an die Greifbacke 120 vorgesehen.

Die erste Lageröffnung 116 definiert eine erste Drehachse 118 entlang der axialen Richtung. Die erste Lageröffnung 116 dient insbesondere der Lagerung und Befestigung der ersten Greifzangenhälfte 40 an dem Rahmen 30. Zudem dient die erste Lageröffnung 116 der Lagerung der Antriebseinheit 43 und der Entastungseinheit 44. Die erste Lageröffnung 116 ist an einem oberen Randbereich der Seitenplatte 110 in einem Abstand von der Antriebsöffnung 111 vorgesehen.

Die zweite Lageröffnung 117 definiert eine zweite Drehachse 119 entlang der axialen Richtung. Die zweite Lageröffnung 117 ist zum Lagern und Befestigen der Vorschubeinheit 45 vorgesehen. Die zweite Lageröffnung 117 ist in einem Abstand entlang einer gedachten Linie, welche in der Greifstellung die Anschlagöffnung 113 mit dem gegriffenen Baumstamm 20 verbindet, vorgesehen.

Die Greifbacke 120 ist ausgebildet, den Baumstamm 20 zu Greifen. Die Form der Greifbacke 120 wird nachfolgend genauer anhand der Figuren 6, 8 und 9 beschrieben. Die Greifbacke umfasst einen gekrümmten Bereich 121, eine Spitze 122, einen ersten Schrägbereich 123, einen zweiten Schrägbereich 124, einen ersten Übergangsbereich 125, einen zweiten Übergangsbereich 126 und eine Greiffläche 127.

Der gekrümmte Bereich 121 ist in der Greifstellung dem Erdboden zugewandt. Der gekrümmte Bereich ist kreisbogenförmig ausgebildet. An den gekrümmten Bereich 121 schließt sich die Spitze 122 an. Die Spitze 122 ist abgerundet. Die Spitze 122 bildet den Übergang zu dem ersten Schrägbereich 123. Der erste Schrägbereich 123 ist gerade ausgebildet. Der gekrümmte Bereich 121 und erste Schrägbereich 123 bilden in der Nähe der Spitze einen Winkel von etwa 35°. Der erste Übergangsbereich 125 ist zwischen dem ersten Schrägbereich 123 und dem zweiten Schrägbereich 124 angeordnet. Der erste Übergangsbereich 125 bildet mit dem ersten Schrägbereich 124 einen stumpfen Winkel. Der erste Übergangsbereich 125 geht gekrümmt in den zweiten Schrägbereich 124 über. Der zweite Schrägbereich 124 ist gerade ausgebildet. Der zweite Schrägbereich 124 bildet mit dem gekrümmten Bereich 121 einen flacheren Winkel als der erste Schrägbereich 123. Der zweite Übergangsbereich 126 grenzt an den zweiten Schrägbereich 124 und ist gekrümmt ausgebildet. Der erste Übergangsbereich 125, der zweite Schrägbereich 124 und der zweite Übergangsbereich 126 bilden eine langgestreckte S-Form. Der zweite Übergangsbereich 126 geht in die Greiffläche 127 über. Die Greiffläche 127 verläuft von dem Übergangsbereich 126 gerade weg. Anschließend verläuft die Greiffläche 127 kreisbogenförmig gekrümmt. Weiter geht die Greiffläche 127 wieder in einen geraden Verlauf über und endet an der Seitenplatte 110.

Der Beschlag 130 ist zum Stabilisieren des Greifschenkels 100 und zum Optimieren des Kraftflusses in dem ersten Greifschenkel 100 vorgesehen. Der Beschlag 130 ist streifenartig ausgebildet und beispielsweise aus einer Metallplatte ausgeschnitten.

Der Beschlag 130 umfasst einen gekrümmten Bereich 131, eine Spitze 132, einen ersten Schrägbereich 133, einen zweiten Schrägbereich 134 und einen ersten Übergangsbereich 135. Ferner umfasst der Beschlag 130 einen Krafteinleitungsbereich 138 und einen Anschlagbereich 139. Der Beschlag 130 ist an dem ersten Greifschenkel 100 angeordnet. Vorliegend ist der Beschlag 130 an der Greifbacke 120 angeordnet. Der Beschlag 130 kann auch an der Seitenplatte 110 angeordnet sein oder die Seitenplatte 110 und die Greifbacke 120 überspannend angeordnet sein.

Der Beschlag 130 ist derart angeordnet, dass der gekrümmte Bereich 131 entlang eines Abschnittes des gekrümmten Bereichs 121 verläuft. Die Spitze 132, der erste Schrägbereich 133, der zweite Schrägbereich 134 und der erste Übergangsbereich 135 folgen im Wesentlichen den entsprechenden Bereichen der Greifbacke 120, also der Spitze 122, dem ersten Schrägbereich 123, dem zweiten Schrägbereich 124 und dem ersten Übergangsbereich 125.

Der Krafteinleitungsbereich 138 leitet auf die Greifbacke 120 und die Greiffläche 127 wirkende Kräfte in den ersten Greifschenkel 100 ein. Der Kraftfluss wird durch die Formgebung an geeigneten Stellen konzentriert, wodurch weniger steife Bereiche des Greifschenkels 100 entlastet werden. Der Krafteinleitungsbereich 138 ist entfernt von der Spitze 132 vorgesehen. Der Krafteinleitungsbereich 138 ist zwischen der Befestigungsöffnung 114 und der Gleitöffnung 115 angeordnet.

Der Anschlagbereich 139 begrenzt die Bewegung der Entastungseinheit 44. Um eine zuverlässige Entastung zu ermöglichen wird die Bewegung der Entastungseinheit 44 eingeschränkt. Ferner werden, wenn die Entastungseinheit 44 an dem Anschlagbereich 139 anliegt, Kraftstöße, die beim Entasten auftreten, über den Beschlag 130 in den ersten Greifschenkel 100 abgeleitet.

Der Greifschenkel 140 ist zum Greifen des Baumstammes 20 ausgebildet.. Der Greifschenkel 140 ist orthogonal zu der axialen Richtung angeordnet. Der Greifschenkel 140 ist mit einem Abstand in der axialen Richtung zu dem ersten Greifschenkel 100 angeordnet. Die einander in der axialen Richtung zugewandten Seiten der Greifschenkel 100, 140 werden hiernach als Innenseite bezeichnet. Die einander in axialer Richtung abgewandten Seiten werden hiernach als Außenseiten bezeichnet. Der erste Greifschenkel 100 und der zweite Greifschenkel 140 sind mittels der Abdeckung 46 verbunden. Der zweite Greifschenkel 140 ist identisch zu dem ersten Greifschenkel 100 ausgebildet. Es können auch nur einzelne Merkmale des ersten Greifschenkels 100 an dem zweiten Greifschenkel 140 verwirklicht sein.

Ferner ist der zweite Greifschenkel 140 zum Befestigen, Lagern und/oder Anordnen anderer Komponenten, wie etwa der Antriebseinheit 43, der Entastungseinheit 44 und der Vorschubeinheit 45 ausgebildet. Der zweite Greifschenkel 140 weist eine Seitenplatte 150, eine Greifbacke 160 und ein Rahmenelement 170 auf. An dem Greifschenkel 140 kann eine Entastungseinheit vorgesehen sein, die insbesondere der Entastung übriggebliebener Äste bei einem Bewegen des Baumstammes 20 entgegen der Entastungsrichtung dient.

Die Trägerplatte 145 ist zwischen dem ersten Greifschenkel 100 und dem zweiten Greifschenkel 140 angeordnet. Die Außenkontur der Trägerplatte 145 ist im Wesentlichen identisch zu der Außenkontur wenigstens einer der Seitenplatten 110, 150 ausgebildet. Im Unterschied zu den Seitenplatten 110, 150 weist die Trägerplatte 145 keine Greifbacke auf. Die Trägerplatte 145 ist von dem zweiten Greifschenkel 140 beabstandet und bildet einen Zwischenraum 146. In den Zwischenraum 146 kann ein gegenüberliegender Greifschenkel, insbesondere auch zusammen mit einem Entastungsmesser, aufgenommen werden. Die Trägerplatte 145 ist mit der Abdeckung 46 verbunden. Die Trägerplatte 145 weist, ähnlich zu der Seitenplatte 110 die notwendigen Öffnungen zur Aufnahme der Vorschubeinheit 45 auf. Ferner weist die Trägerplatte 145 eine Mehrzahl von Befestigungsöffnungen auf, die zum Befestigen der Antriebseinheit 43 dienen.

Die Seitenplatte 150 dient der Befestigung, Lagerung und Anordnung verschiedener Komponenten. Die Seitenplatte 150 umfasst eine Befestigungsöffnung 154, eine Gleitöffnung 155 und eine erste Lageröffnung 156. Die Seitenplatte 150 kann auch identisch zu der Seitenplatte 110 ausgebildet sein und demnach auch eine Antriebsöffnung, eine Mehrzahl von Stiftöffnungen, eine Anschlagöffnung und/oder eine zweite Lageröffnung umfassen.

Die Befestigungsöffnung 154 dient der Befestigung der Entastungseinheit 44. Speziell ist die Befestigungsöffnung 154 ausgebildet, ein beaufschlagtes elastisches Element zu stützen. Die Befestigungsöffnung 154 ist an einem Randbereich der Seitenplatte 150 angrenzend an die Greifbacke 160 vorgesehen.

Die Gleitöffnung 155 ist ausgebildet, die Entastungseinheit 44 beweglich zu lagern. Die Gleitöffnung 155 ist als Langlochöffnung ausgebildet. Die Gleitöffnung erstreckt sich entlang einer gedachten Linie, welche in der Greifstellung die Befestigungsöffnung 154 mit dem gegriffenen Baumstamm 20 verbindet. Die Gleitöffnung 155 ist angrenzend an die Greifbacke 160 vorgesehen.

Die erste Lageröffnung 156 definiert eine erste Drehachse 118 entlang der axialen Richtung. Die erste Lageröffnung 156 dient der Lagerung und Befestigung der ersten Greifzangenhälfte 40 an dem Rahmen 30. Zudem dient die erste Lageröffnung 156 der Lagerung der Antriebseinheit 43 und der Entastungseinheit 44. Die erste Lageröffnung 156 ist an einem oberen Randbereich der Seitenplatte 150 vorgesehen.

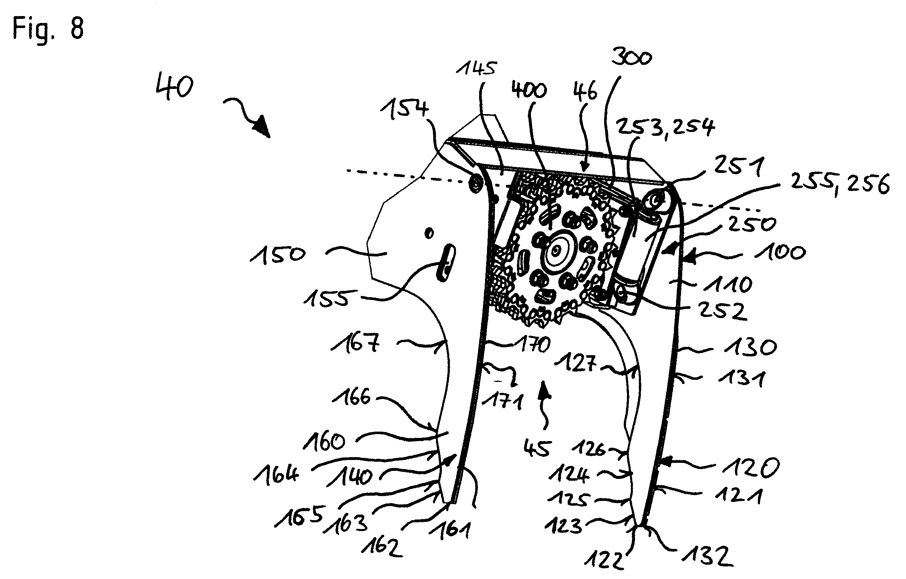

Die Greifbacke 160 ist ausgebildet, den Baumstamm 20 zu Greifen. Die Form der Greifbacke 160 wird nachfolgend genauer anhand der Figuren 6 und 8 beschrieben. Die Greifbacke umfasst einen gekrümmten Bereich 161, eine Spitze 162, einen ersten Schrägbereich 163, einen zweiten Schrägbereich 164, einen ersten Übergangsbereich 165, einen zweiten Übergangsbereich 166 und eine Greiffläche 167.

Der gekrümmte Bereich 161 ist in der Greifstellung dem Erdboden zugewandt. Der gekrümmte Bereich ist kreisbogenförmig ausgebildet. An den gekrümmten Bereich 161 schließt sich die Spitze 162 an. Die Spitze 162 ist abgerundet. Die Spitze 162 bildet den Übergang zu dem ersten Schrägbereich 163. Der erste Schrägbereich 163 ist gerade ausgebildet. Der gekrümmte Bereich 161 und erste Schrägbereich 163 bilden in der Nähe der Spitze einen Winkel von etwa 35°. Der erste Übergangsbereich 165 ist zwischen dem ersten Schrägbereich 163 und dem zweiten Schrägbereich 164 angeordnet. Der erste Übergangsbereich 165 bildet mit dem ersten Schrägbereich 164 einen stumpfen Winkel. Der erste Übergangsbereich 165 geht gekrümmt in den zweiten Schrägbereich 164 über. Der zweite Schrägbereich 164 ist gerade ausgebildet. Der zweite Schrägbereich 164 bildet mit dem gekrümmten Bereich 161 einen flacheren Winkel als der erste Schrägbereich 163. Der zweite Übergangsbereich 166 grenzt an den zweiten Schrägbereich 164 und ist gekrümmt ausgebildet. Der erste Übergangsbereich 165, der zweite Schrägbereich 164 und der zweite Übergangsbereich 166 bilden eine langgestreckte S-Form. Der zweite Übergangsbereich 166 geht in die Greiffläche 167 über. Die Greiffläche 167 verläuft von dem Übergangsbereich 166 gerade weg. Anschließend verläuft die Greiffläche 167 kreisbogenförmig gekrümmt. Weiter geht die Greiffläche 167 wieder in einen geraden Verlauf über und endet an der Seitenplatte 150.

Das Rahmenelement 170 ist zum Stabilisieren des Greifschenkels 140 und zum Optimieren des Kraftflusses in dem Greifschenkel 140 vorgesehen. Das Rahmenelement 170 ist streifenartig eine Öffnung umlaufend ausgebildet und beispielsweise aus einer Metallplatte ausgeschnitten.

Das Rahmenelement 170 umfasst einen gekrümmten Bereich 171, eine Spitze 172, einen ersten Schrägbereich 173, einen zweiten Schrägbereich 174, einen ersten Übergangsbereich 175, einen zweiten Übergangsbereich 176 und eine Greiffläche 177. Das Rahmenelement 170 ist an dem Greifschenkel 140 angeordnet. Vorliegend ist das Rahmenelement 170 an der Greifbacke 160 auf der Innenseite angeordnet.

Das Rahmenelement 170 ist derart angeordnet, dass der gekrümmte Bereich 171 entlang eines Abschnittes des gekrümmten Bereichs 161 verläuft. Die Spitze 172, der erste Schrägbereich 173, der zweite Schrägbereich 174, der erste Übergangsbereich 175, der zweite Übergangsbereich 176 und die Greiffläche 177 folgen im Wesentlichen den entsprechenden Bereichen der Greifbacke 160, also der Spitze 162, dem ersten Schrägbereich 163, dem zweiten Schrägbereich 164, dem ersten Übergangsbereich 165, dem zweiten Übergangsbereich 166 und der Greiffläche 167.

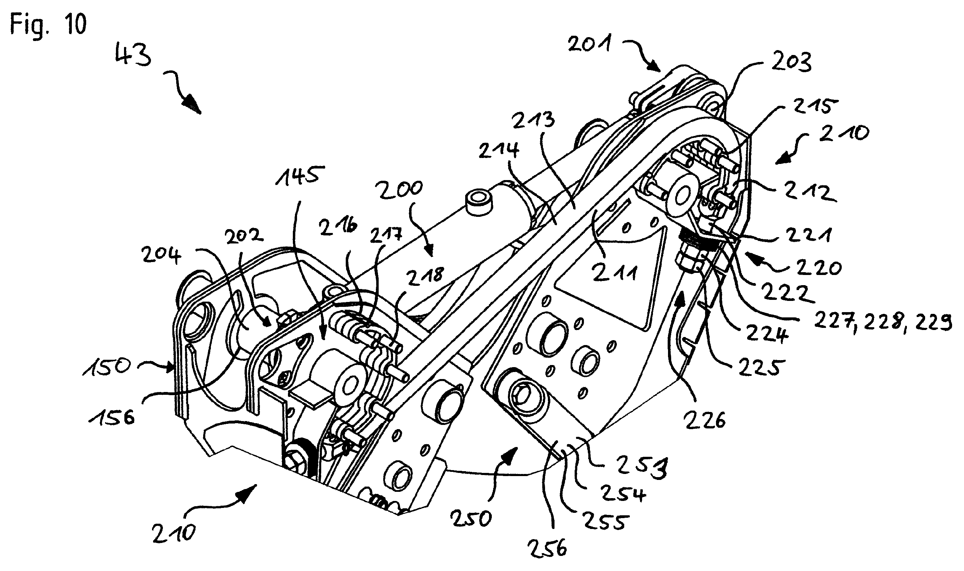

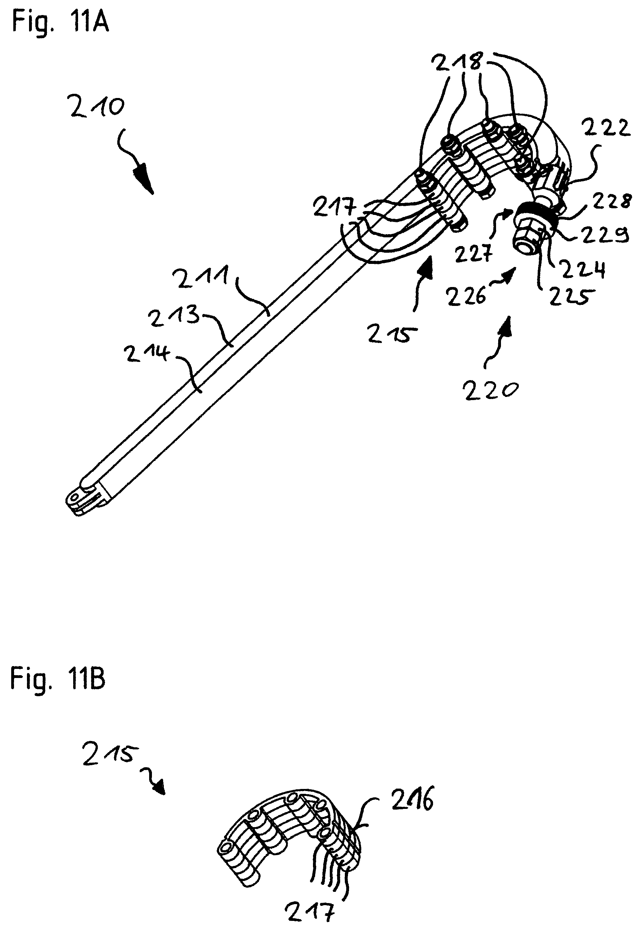

Es wird nachfolgend auf die Figuren 10, 11A und 11 B Bezug genommen. Die Antriebseinheit 43 ist ausgebildet, die erste Greifzangenhälfte 40 und die zweite Greifzangenhälfte 41 anzutreiben. Die Antriebseinheit 43 umfasst einen Hydraulikzylinder 200, einen Verbindungsstab 204 und ein Zugmittelgetriebe 210.

Der Hydraulikzylinder 200 ist ausgebildet die erste Greifzangenhälfte 40 von der Öffnungsstellung in die Greifstellung zu bewegen. Der Hydraulikzylinder 200 weist eine erste Befestigungsöffnung 201, eine zweite Befestigungsöffnung 202 und einen Befestigungsbolzen 203 auf. Die erste Befestigungsöffnung 201 ist an dem Kolben vorgesehen und dient der Befestigung an der Antriebsöffnung 111 mittels des Befestigungsbolzens 203. Die zweite Befestigungsöffnung 202 ist an dem Zylinder vorgesehen und dient der Befestigung an der ersten Lageröffnung 116 mittels des Verbindungsstabes 204. Die Befestigungsöffnung 202 ist insbesondere in Halbschalenform geteilt ausgeführt, wobei ein Teil am Zylinder befestigt und der zweite Teil an- und abbaubar ist.

Das Zugmittelgetriebe 210 umfasst ein Zugmittel 211, ein Abrollglied 215, ein Befestigungsglied 220. Das Zugmittelgetriebe 210 ist ausgebildet die Bewegung der ersten Greifzangenhälfte 40 und der zweiten Greifzangenhälfte 41 zu synchronisieren.

Das Zugmittel 211 weist einen Endabschnitt 212 auf und ist als Bolzenkette 213 ausgeführt. Bevorzugt ist das Zugmittel 211 als Flyerkette 214 ausgebildet. Das Zugmittel 211 überträgt eine Zugkraft von der ersten Greifzangenhälfte 40 auf die zweite Greifzangenhälfte 41 oder umgekehrt.

Das Abrollglied 215 steuert die Synchronisierung. Das Abrollglied 215 umfasst eine Abrollfläche 216, eine Mehrzahl von Abrollsegmenten 217 und eine Mehrzahl von Stiften 218. An der Abrollfäche 216 kann das Zugmittel 211 anliegen. Die vorliegend fünf Abrollsegmente 217 sind halbkreisbogenförmig ausgebildet und weisen Öffnungen für die Stifte 218 auf. Die Abrollsegmente 217 sind auf die Stifte 218 aufgesteckt und bilden eine zylinderförmige Teilmantelfläche, welche als Abrollfläche 216 fungiert.

Das Befestigungsglied 220 ist zum Befestigen des Zugmittels 211 ausgebildet. Das Befestigungsglied 220 umfasst einen Befestigungsflansch 221, einen Zuganker 222 und ein Druckdämfpungsglied 227. Der Befestigungsflansch 221 dient als Lager für den Zuganker 222. Der Befestigungsflansch 221 weist eine Öffnung für den Zuganker 222 auf. Der Zuganker 222 ist zum Befestigen des Zugmittels 211 ausgebildet. Der Zuganker 222 ist mittels einer Mutter 224 und einer Kontermutter 225 an dem Befestigungsflansch 221 befestigt. Der Zuganker 222 bildet mit den Muttern 224, 225 ein Spannelement 226 um die Spannung des Zugmittels 211 einzustellen.

Das Druckdämpfungsglied 227 ist ausgebildet, Kraftstöße, die durch das Zugmittel 211 übertragen werden, zu dämpfen. Das Druckdämpfungsglied 227 umfasst ein Tellerfederpaket 228, das mindestens eine Tellerfeder 229 aufweist. Das Tellerfederpaket 228 ist zwischen der Mutter 224 und dem Befestigungsflansch 221 angeordnet.

Die Entastungseinheit 44 ist zum Entfernen der Äste 21 von dem Baumstamm 20 vorgesehen. Die Entastungseinheit 44 umfasst wenigstens ein Entastungsmesser 230 und ein Rückstellglied 250.

Das Entastungsmesser 230 ist ausgebildet, die Äste 21 abzuscheren und an der Außenseite des Greifschenkels 100 vorgesehen. Das Entastungsmesser 230 ist ausgebildet, mit dem Rückstellglied 250 verbunden zu werden. Das Entastungsmesser 230 umfasst eine Grundplatte 231, ein Klingenblatt 233, ein erstes Kraftumlenkelement 238, ein zweites Kraftumlenkelement 239 und einen Stützzylinder 241.

Die Grundplatte 231 weist eine Befestigungsöffnung für das Rückstellglied 250 und eine Kraftübertragungsfläche 232 auf. Die Kraftübertragungsfläche 232 ist ausgebildet, Kraftstöße von dem Klingenblatt 233 in den ersten Greifschenkel 100 einzuleiten. Die Ausgestaltung als Fläche erlaubt eine günstigere Verteilung des Kraftflusses.

Das Klingenblatt 233 springt von der Grundplatte 231 in der axialen Richtung vor. Das Klingenblatt 233 ist kreisbogenförmig gekrümmt und folgt im Wesentlichen der Krümmung der Greiffläche 127. Das Klingenblatt 233 umfasst eine Schneide 234, eine Fehlschärfe 236 und eine Gleitfläche 237. Das Klingenblatt 233 springt zunächst unter einem Winkel von etwa 5° zu der axialen Richtung vor und verjüngt sich anschließend unter einem Winkel von etwa 35° zu einer Spitze. Die Schneide 234 springt in der axialen Richtung vor und verjüngt sich zu einer Schneidkante 235. Die Schneidkante 235 ist der schmalste Bereich des Klingenblattes 233. Die Fehlschärfe 236 ist an einem spitzen Endbereich des Klingenblattes 233 vorgesehen. Die Gleitfläche 237 ist dem Baumstamm 20 zugewandt und erlaubt ein Abgleiten des Baumstammes 20. Die Gleitfläche 237 kann für sich genommen nur die Rückstellkraft F_{R} des Rückstellglieds 250 als Greifkraft übertragen, um den Baumstamm 20 zu halten.

Das erste Kraftumlenkelement 238 dient dem teilweisen Umlenken von Kraftstößen von der axialen Richtung in eine dazu orthogonale Richtung, insbesondere in Richtung des Rückstellgliedes 250. Das erste Kraftumlenkelement 238 ist ein plattenförmiges Element. Das erste Kraftumlenkelement 238 ist zwischen dem Klingenblatt 233 und der Grundplatte 231 in einem Winkel von etwa 45° angeordnet.

Das zweite Kraftumlenkelement 239 dient dem teilweisen Umlenken von Kraftstößen von der axialen Richtung in eine dazu orthogonale Richtung. Das zweite Kraftumlenkelement 239 ist ein plattenförmiges Element und springt von der Grundplatte 231 in der axialen Richtung vor. Das zweite Kraftumlenkelement 239 weist einen Umlenkbereich 240 auf. Der Umlenkbereich 240 verjüngt sich zur Mitte hin und ist gekrümmt ausgebildet. Der Umlenkbereich 240 ist demnach konkav gekrümmt. Das zweite Kraftumlenkelement 239 ist zwischen dem Klingenblatt 233 und dem Stützzylinder 241 angeordnet. Der Stützzylinder 241 ist ausgebildet, das Klingenblatt 233 zu stützen. Der Stützzylinder 241 springt von der Grundplatte 231 in der axialen Richtung vor.

Das Rückstellglied 250 ist ausgebildet eine Rückstellkraft F_{R} für das Entastungsmesser 230 zu erzeugen. Das Rückstellglied 250 umfasst einen ersten Befestigungsbolzen 251, einen zweiten Befestigungsbolzen 252, ein Rückstellelement 253 und eine Schutzabdeckung 255.

Der erste Befestigungsbolzen 251 dient dem Befestigen des Rückstellelements 253 an der Befestigungsöffnung 114. Der zweite Befestigungsbolzen 252 dient dem Befestigen des Rückstellelements 253 in der Gleitöffnung 115 derart, dass der zweite Befestigungsbolzen 252 in der Gleitöffnung 115 bewegbar ist. Das Rückstellelement 253 erzeugt eine Rückstellkraft für das Entastungsmesser 230. Das Rückstellelement 253 ist vorliegend als Druckfeder 254 ausgebildet.

Die Schutzabdeckung 255 verringert die Verschmutzung und somit eine Beeinträchtigung der Funktion des Rückstellelements 253. Im Fall der Druckfeder 254 ist ein Schutzrohr 256 vorgesehen, in das die Druckfeder 254 aufgenommen ist.

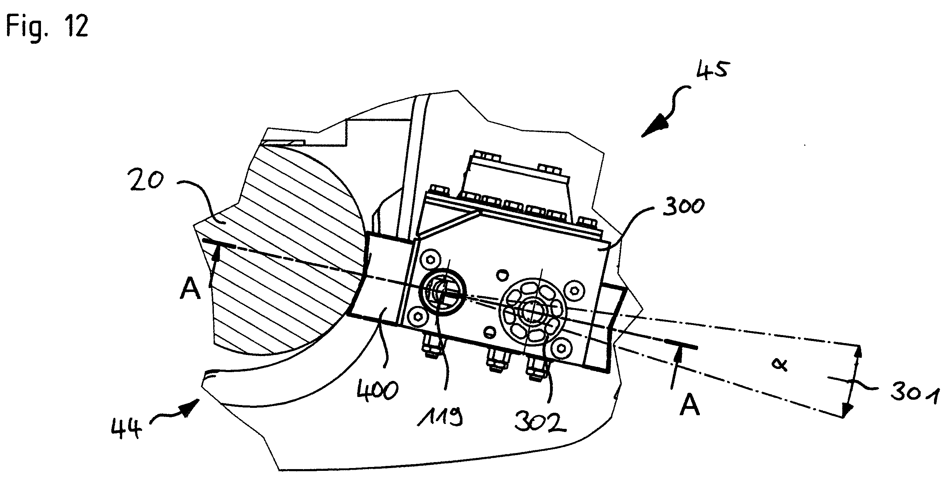

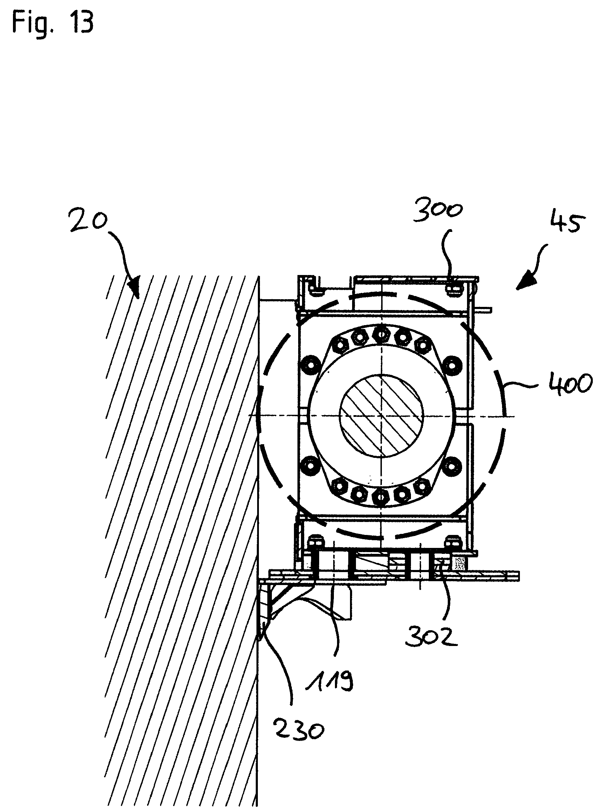

Es wird nachfolgend insbesondere auf die Figuren 12 und 13 Bezug genommen. Die Vorschubeinheit 45 ist ausgebildet, den Baumstamm 20 in der axialen Richtung zu bewegen. Die Vorschubeinheit 45 umfasst einen Rahmen 300 und eine Vorschubwalze 400. Der Rahmen 300 ist ausgebildet, die Vorschubwalze 400 schwenkbar um die zweite Drehachse 119 in einer Mittelstellung 301 zu Lagern. Der Rahmen 300 umfasst ein Dämpfungselement 302. Der Rahmen 300 kann um einen Winkel α im Bereich von ± 5° um die Mittelstellung 301 schwenken. Das Dämpfungselement 302 begrenzt die Bewegung des Rahmens 300 und dämpft Erschütterungen aus. Die Vorschubwalze 400 ist ausgebildet, den Baumstamm 20 formschlüssig zu Erfassen und in der axialen Richtung oder dagegen zu bewegen. Die Vorschubwalze 400 ist in dem Rahmen 300 angeordnet.

Nachfolgend wird die zusammengebaute Greifzange 10 und deren Funktion anhand der Figuren 1 bis 13 beschrieben. Die erste Greifzangenhälfte 40 und die zweite Greifzangenhälfte 41 sind an dem Rahmen 30 zwischen einer Öffnungsstellung und einer Greifstellung jeweils um die axiale Richtung schwenkbar befestigt. Die zweite Greifzangenhälfte 41 ist identisch zu der ersten Greifzangenhälfte 40 ausgebildet und in der axialen Richtung zu der ersten Greifzangenhälfte 40 versetzt.

Jeweils eine Antriebseinheit 43 ist an der ersten Greifzangenhälfte 40 und der zweiten Greifzangenhälfte 41 vorgesehen. Insgesamt sind demnach zwei Hydraulikzylinder 200 und zwei Zugmittelgetriebe 210 vorgesehen. Der Hydraulikzylinder 200 ist mit dem ersten Befestigungsbolzen 203 an der Antriebsöffnung 111 und über den Verbindungsstabes 204 an der ersten Lageröffnung 116 befestigt. Jeweils ein Abrollglied 215 ist an jedem Greifschenkel 100, 140 angeordnet, wobei die Abrollglieder 215 entgegengesetzt orientiert sind. Insgesamt sind demnach vier Abrollglieder 215 vorgesehen, wobei bei zwei Abrollgliedern 215 die Abrollfläche 216 nach oben und bei zwei Abrollgliedern 215 die Abrollfläche 216 nach unten zeigt. Die Stifte 218 sind in den Stiftöffnungen 112, 152 aufgenommen und befestigt. Die Abrollsegmente 216 sind auf die Stifte 218 gesteckt und miteinander stoffschlüssig verbunden. Das Zugmittel 211 ist mittels des Zugankers 222 an dem Befestigungsflansch 221 befestigt. Das Druckdämpfungselement 227 ist zwischen der Mutter 224 und dem Befestigungsflansch 221 vorgesehen. Beim Bewegen der ersten Greifzangenhälfte 40 wird das Zugmittel 211 an der unteren Seite abgerollt und bei der zweiten Greifzangenhälfte 41 wird das Zugmittel an der oberen aufgerollt. Bei dieser Art der Synchronisierung des Schwenkvorganges beider Greifzangenhälften ist der Einschwenkwinkelfehler in etwa gleich null.

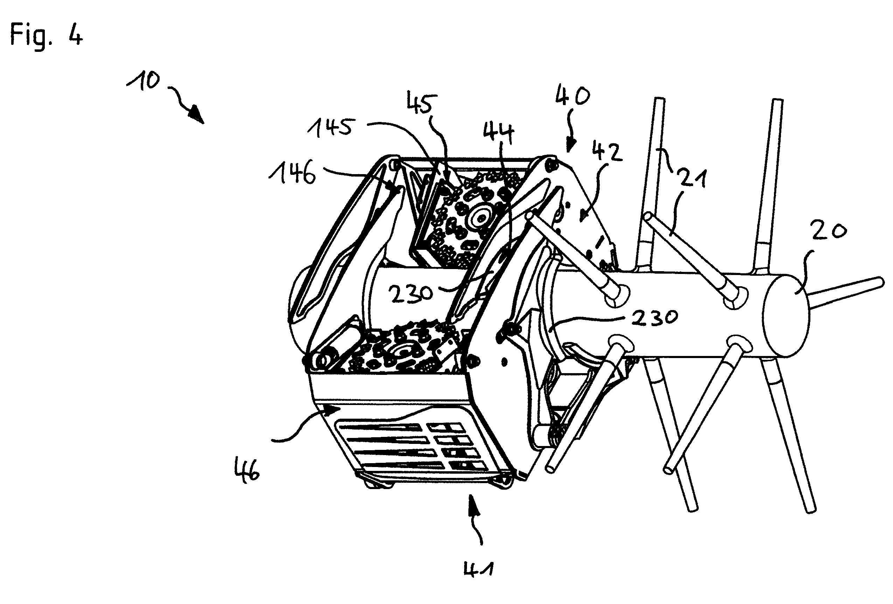

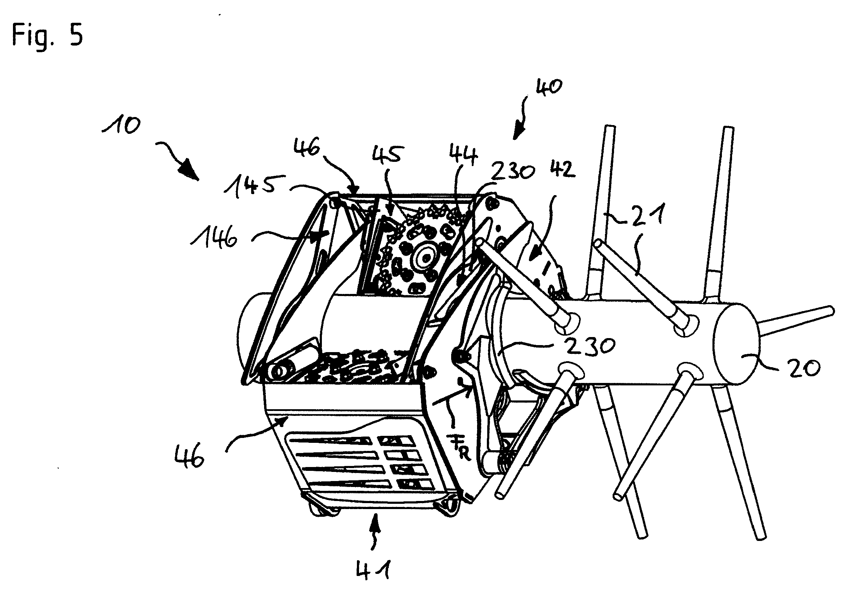

Die Entastungseinheit 44 ist an dem ersten Greifschenkel 100 vorgesehen. Das Entastungsmesser 230 ist an der ersten Lageröffnung 116 schwenkbar gelagert und wird gleichzeitig in der Gleitöffnung 115 geführt. Die Bewegung des Entastungsmessers 230 ist demnach begrenzt. Das Rückstellglied 250 ist an der Befestigungsöffnung 114 befestigt und mit dem Entastungsmesser 230 an der Gleitöffnung 115 mittels eines in der Gleitöffnung 115 gleitenden Bolzens verbunden. Dadurch kann das Entastungsmesser 230 zwischen einer ersten Stellung, wie sie in Fig. 4 dargestellt ist, und einer zweiten Stellung, wie sie beispielhaft in Fig. 5 dargestellt ist, bewegt werden. In Fig. 4 liegt das Entastungsmesser 230 nah an dem Baumstamm 20 an, während in Fig. 5 das Entastungsmesser 230 maximal ausgelenkt ist. Mit dem Pfeil F_{R} ist die durch das Rückstellglied 250 erzeugte Rückstellkraft angedeutet. Das Rückstellglied 250 drängt das Entastungsmesser 230 demnach in Richtung des Baumstammes 20.

Die Vorschubeinheit 45 ist zwischen den Greifschenkeln 100, 140 vorgesehen. Die Vorschubeinheit 45 ist um die zweite Drehachse 119 schwenkbar angeordnet. Der Rahmen 300 ist an der zweiten Lageröffnung 117 gelagert. Das Dämpfungselement 302 wirkt mit der Anschlagöffnung 113 zusammen und begrenzt die Bewegung der Vorschubeinheit 45 und dämpft Erschütterungen.

Die Abdeckung 46 erstreckt sich zwischen den Greifschenkeln 100, 140 und deckt die Vorschubeinheit 45 ab. Die Abdeckung 46 verhindert das Eindringen von Baumteilen, welche den Betrieb der Vorschubeinheit 45 behindern könnten.

Die Greifzangenhälften 40, 41 sind zwischen einer Greifstellung und einer Öffnungsstellung bewegbar. In der Öffnungsstellung hat die Greifzange 10 eine Öffnungsweite w, die mindestens doppelt so groß ist, wie der maximale Durchmesser eines Baumstammes, der noch entastet werden kann (Entastungsdurchmesser). Beträgt der maximale Entastungsdurchmesser etwa 30 cm, so beträgt die Öffnungsweite w mindestens 60 cm oder mehr.

Liegt der Durchmesser des Baumstammes 20 unter dem Entastungsdurchmesser, so wird der Baumstamm 20 hauptsächlich durch eine Punkt- und/oder Linienberührung zwischen Bereichen des Rahmens 30 und den Vorschubeinheiten 45 gehalten. Das Entastungsmesser 230 trägt ebenfalls zur Haltekraft bei. Nachrangig können vor allem bei gekrümmten Baumstämmen auch die Greifbacken 120, 160, insbesondere mittels der Greifflächen 127, 167, zur Haltekraft beitragen. Liegt der Durchmesser des Baumstammes 20 über dem Entastungsdurchmesser, so wird der Baumstamm 20 hauptsächlich durch eine Punkt- und/oder Linienberührung zwischen den Greifschenkeln 100, 140, insbesondere zwischen den Greifbacken 120, 160 der Greifzangenhälften 40, 41 und Bereichen des Rahmens 30 gehalten.

Zum Greifen des Baumstammes 20 werden die erste Greifzangenhälfte 40 und die zweite Greifzangenhälfte 41 in die Greifstellung geschwenkt. Der Baumstamm 20 ist dann formschlüssig in der Greifzange 10 zwischen der ersten Greifzangenhälfte 40 und der zweiten Greifzangenhälfte 41 erfasst.

Beim Greifen werden die Greifzangenhälften 40, 41 durch die Hydraulikzylinder 200 bewegt. Das Zugmittel 211 ist mittels des Befestigungsgliedes 220 an der jeweiligen Greifzangenhälfte 40, 41 befestigt und rollt an den Abrollgliedern 215 ab. Dadurch wird die Kraft der Hydraulikzylinder 200 gleichmäßig auf die beiden Greifzangenhälften 40, 41 verteilt. Ungleiche Geschwindigkeiten werden somit vermieden und die Greifzangenhälften schwenken nahezu ohne Fehler synchron von der Öffnungsstellung in die Greifstellung oder umgekehrt. Der Baumstamm 20 wird von den Greifbacken 120, 160 erfasst. Der Baumstamm 20 gleitet an der Gleitfläche 237 der, insbesondere vorgespannten, Entastungsmesser 230 zwischen die Vorschubeinheiten 45 und wird von diesen erfasst. Der Baumstamm 20 ist dann formschlüssig gehalten. Der Baumstamm 20 wird aufgrund der Form der Greifbacken 120, 160 automatisch zentriert.

Die Vorschubeinheit 45 passt sich automatisch an die Kontur des Baumstammes 20 an. Sobald die Vorschubwalze 400 den Baumstamm 20 berührt, übt der Baumstamm 20 eine Kraft auf die Vorschubwalze 400 aus. Durch Anpressen der Vorschubwalze 400 an den Baumstamm 20 entsteht aufgrund der Lage der zweiten Drehachse 119 bei einer einseitigen Berührung der Vorschubwalze 400 durch den Baumstamm 20 eine Kraft. Durch die Lage der zweiten Drehachse 119 der Vorschubeinheit 45 drückt diese Kraft die Vorschubeinheit 45 in eine kraftausgeglichene Stellung, beispielsweise die Mittelstellung 301. In dieser Stellung ist der Formschluss zwischen Vorschubwalze 400 und Baumstamm 20 nahezu optimal. Liegt also die Vorschubwalze 400 nicht gleichmäßig an dem Baumstamm 20 an, wird der Rahmen 300 durch die Kraft des Baumstammes 20 in Drehung versetzt, bis die Vorschubwalze 400 gleichmäßig an dem Baumstamm 20 anliegt. Der Baumstamm 20 wird von der Vorschubwalze 400 formschlüssig erfasst und kann in der axialen Richtung oder entgegen bewegt werden. Somit passt sich die Vorschubeinheit 45 ideal dem Stamm an. Eine möglichst große Eingriffsfläche kann so erreicht werden. Bei kleinen Stammdurchmessern ist eine solche selbstständige Regelung des Anpresswinkels schwierig. Deshalb können die Vorschubeinheiten 45 im letzten Bereich des Einschwenkbereiches in die durch das Dämpfungselement 302 definierte Maximalauslenkung gehen. Als Alternative dazu können die Vorschubeinheiten 45, was den Anpresswinkel betrifft, in diesem Bereich auch zwangsgeführt werden.

Wird der Baumstamm 20 entgegen der axialen Richtung bewegt, wird er entastet. Die Äste 21 werden durch das starre Entastungsmesser 35, die beweglichen Entastungsmesser 36 und die Entastungsmesser 230 abgeschert. Die Kraft fließt von der Schneidkante 235 über die Schneide 234 zu dem Klingenblatt 233. Die Kraft auf das Klingenblatt 233 wird durch das erste Kraftumlenkelement 238 und das zweite Kraftumlenkelement 239 wenigstens teilweise in eine Richtung orthogonal zu der axialen Richtung umgeleitet. Die Kraft wird über die Kraftübertragungsfläche 232 in den ersten Greifschenkel 100 eingeleitet und von dort in die übrige Greifzangenhälfte 40 verteilt. Dadurch werden die Komponenten vergleichsweise weniger und gleichmäßiger belastet. Unebenheiten der Oberfläche des Baumstammes 20 werden durch eine Bewegung der Entastungsmesser 230 gegen die Rückstellkraft F_{R} des Rückstellglieds 250 ausgeglichen. Somit wird eine zuverlässige und gleichmäßige Entastung gewährleistet.

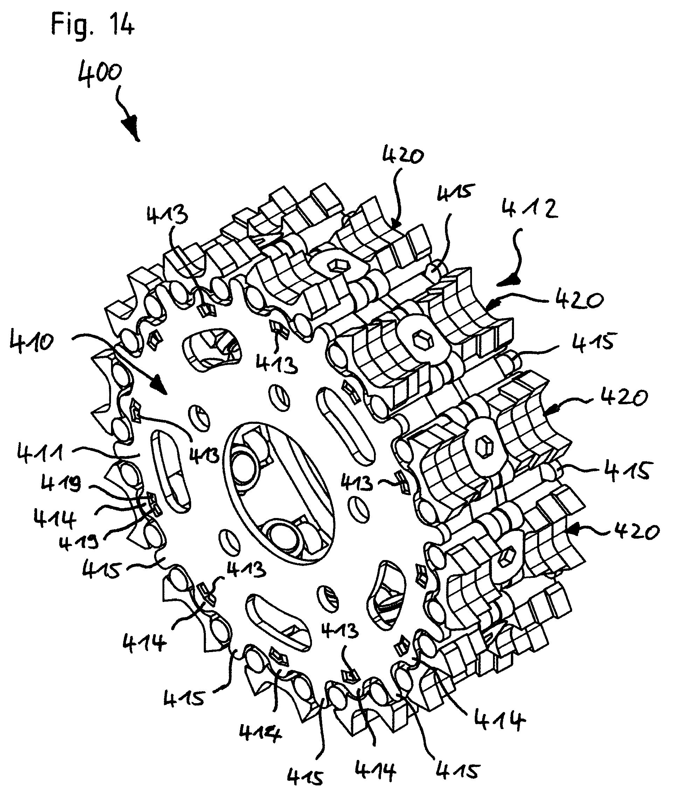

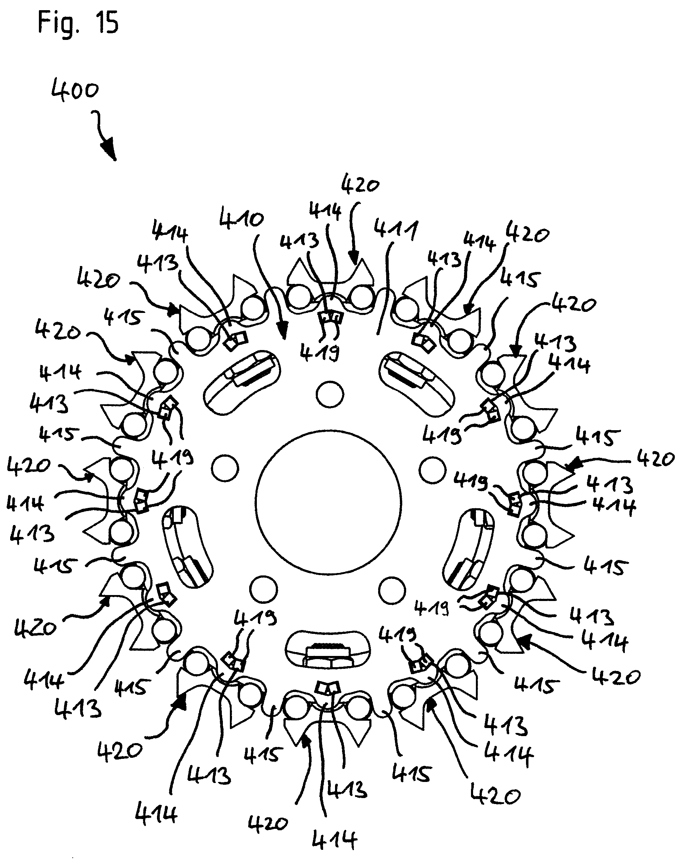

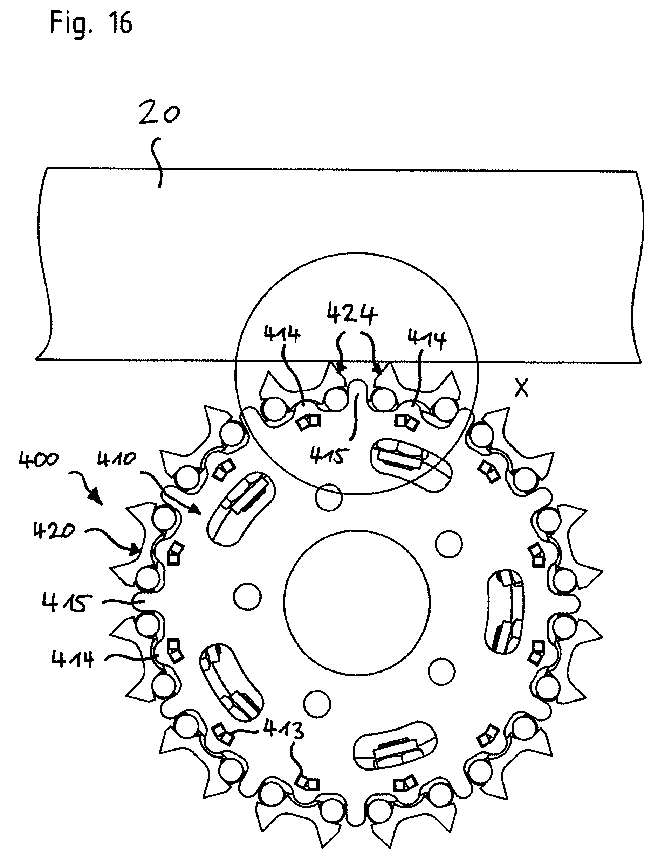

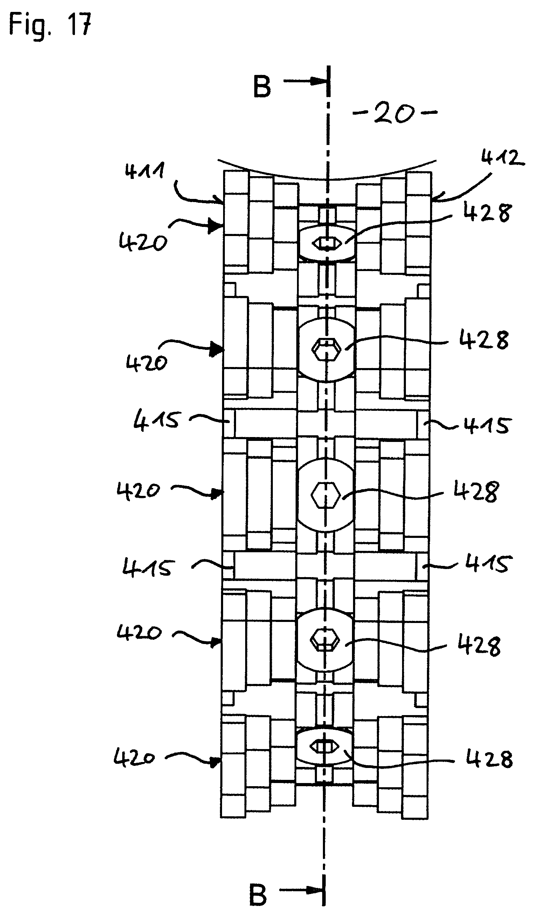

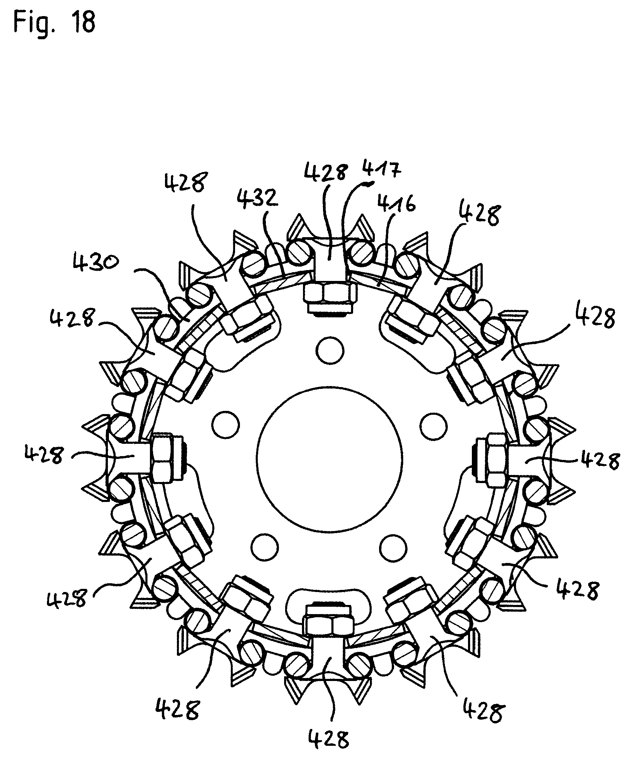

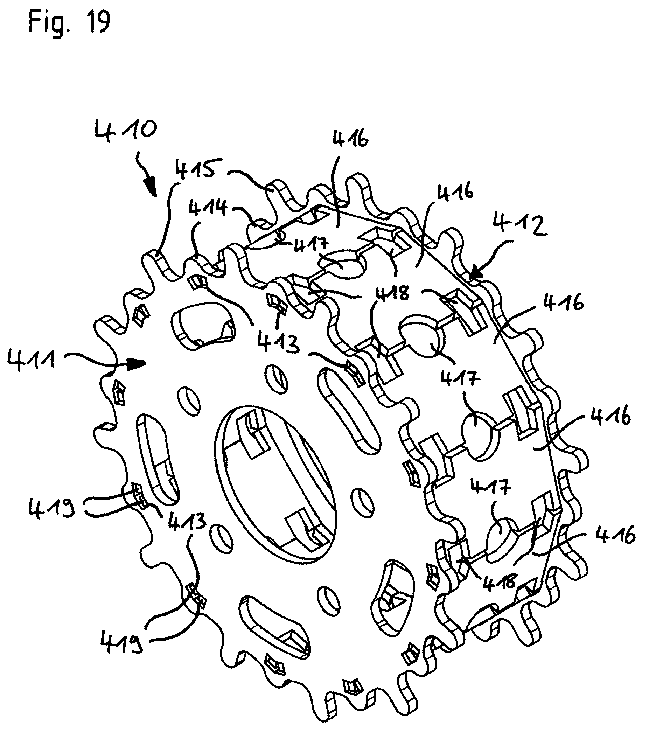

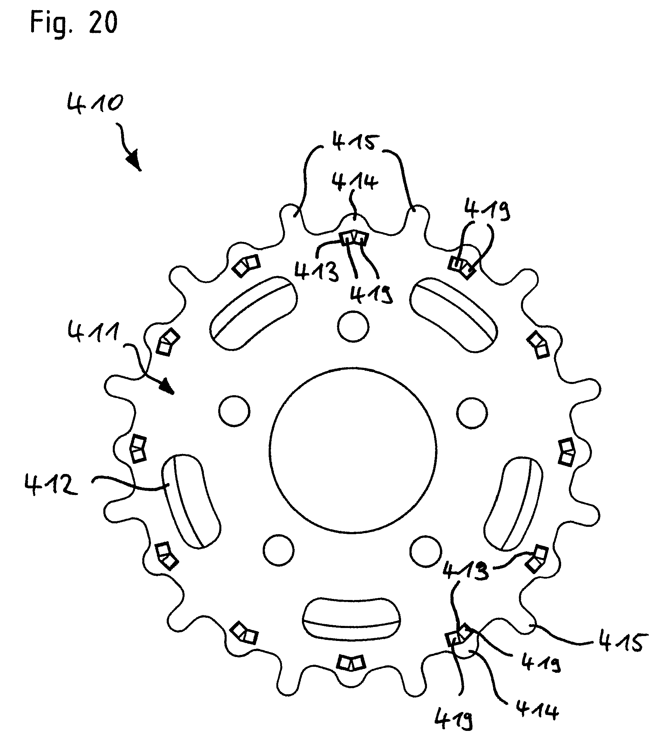

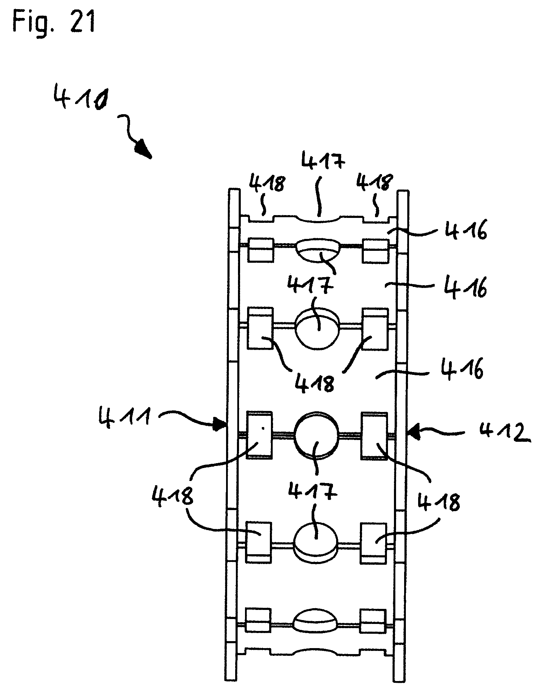

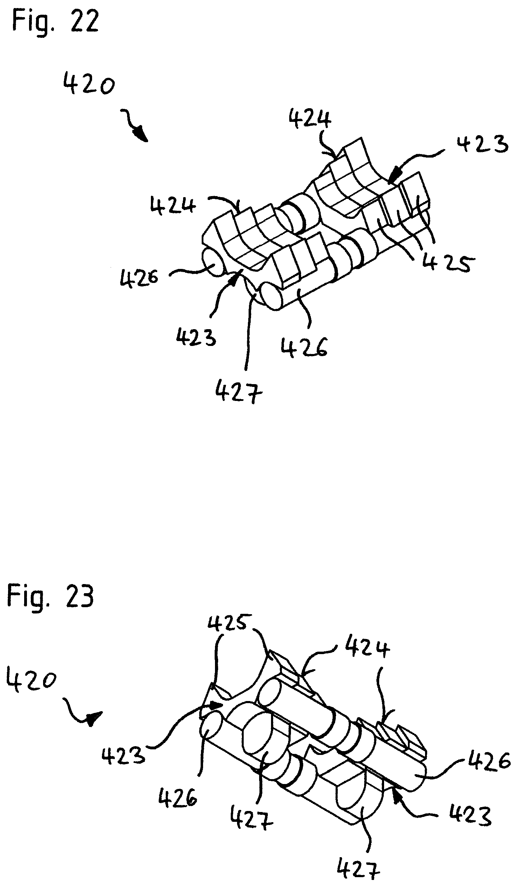

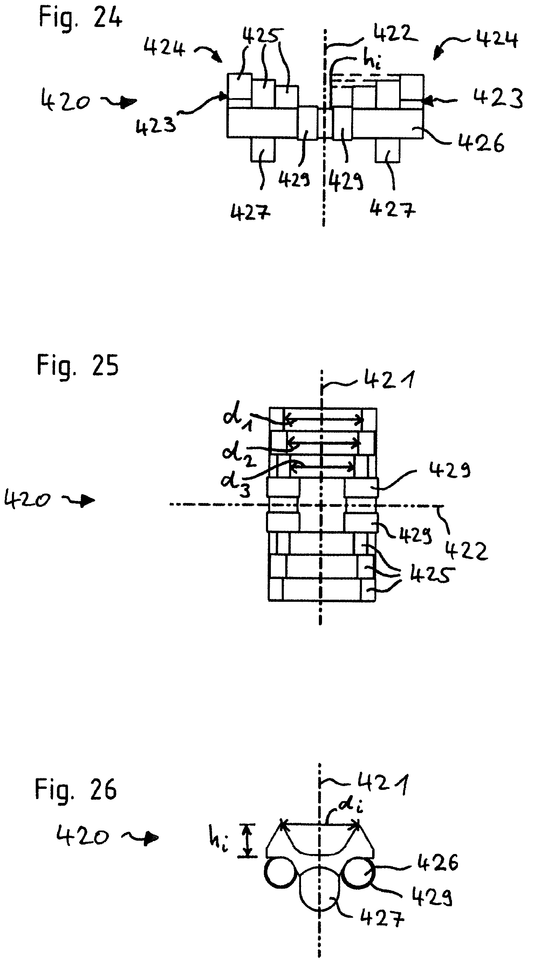

Nachfolgend wird anhand der Figuren 14 bis 28 die Vorschubwalze 400 genauer erläutert. Die Vorschubwalze 400 umfasst einen Walzenkörper 410, wenigstens ein Vorschubelement 420 und wenigstens einen Stützring 430.

Der Walzenkörper 410 ist ausgebildet, die Vorschubelemente 420 und die Stützringe zu lagern. Der Walzenkörper 410 umfasst eine Grundplatte 411, eine Deckplatte 412 und eine Mehrzahl von Umfangsplatten 416.

Die Grundplatte 411 dient der Befestigung eines Antriebs. Die Grundplatte 411 und die Deckplatte 412 sind jeweils als im Wesentlichen kreisförmige Platte ausgebildet. Die Grundplatte 411 und die Deckplatte 412 umfassen eine Mehrzahl von Öffnungen 413, eine Mehrzahl von Abrollvorsprüngen 414 und eine Mehrzahl von Anschlagvorsprüngen 415. Die Öffnungen 413 sind ausgebildet, die Umfangsplatten 416 aufzunehmen, um diese insbesondere für das Verschweißen zu positionieren.

Die Abrollvorsprünge 414 und die Anschlagvorsprünge 415 sind entlang des Umfangs der Grundplatte 411 und der Deckplatte 412 im Wechsel angeordnet. Die Abrollvorsprünge 414 sind gekrümmt ausgebildet. An den Abrollvorsprüngen 414 können die Vorschubelemente 420 abrollen. Die Abrollvorsprünge 414 erlauben eine Kipp- und Längsbewegung des Vorschubelements 420 entlang der Umfangsrichtung der Grundplatte 411 oder der Deckplatte 412.

Die Anschlagvorsprünge 415 springen in axialer Richtung der Grundplatte 411 und der Deckplatte 412 vor. Die Anschlagvorsprünge 415 springen weiter vor als die Abrollvorsprünge 414. Die Anschlagvorsprünge 415 sind ausgebildet, eine Bewegung des Vorschubelements 420 zu begrenzen.

Die Umfangsplatte 416 ist als im Wesentlichen rechteckige Platte ausgebildet. Die Umfangsplatte 416 ist ausgebildet eine Befestigungsöffnung 417 und eine Mehrzahl von Zapfenöffnungen 418 zu bilden. Ferner weist die Umfangsplatte 416 vier Vorsprünge 419 auf. Die Umfangsplatte 416 ist an ihren kurzen Seiten mit zwei rechteckförmigen Aussparungen und einer dazwischen angeordneten konkaven kreisbogenförmigen Aussparung versehen. Die Vorsprünge 419 parallel zu den kurzen Seiten an den Endbereichen der Umfangsplatte 416 vor. Die Vorsprünge 419 sind passend zu den Öffnungen 413 ausgebildet.

Das Vorschubelement 420 dient dem formschlüssigen Erfassen des Baumstammes 20. Das Vorschubelement 420 weist eine Mittellängsebene 421 und eine Mittelquerebene 422 auf, bezüglich derer das Vorschubelement 420 spiegelsymmetrisch ausgebildet ist. Das Vorschubelement 420 umfasst zwei Zahnglieder 423 und zwei Stützglieder 426. Die Zahnglieder 423 sind spiegelsymmetrisch bezüglich der Mittelquerebene 422 angeordnet. Die Stützglieder 426 sind spiegelsymmetrisch bezüglich der Mittellängsebene 421 angeordnet.

Das Zahnglied 423 ist ausgebildet den Baumstamm 20 formschlüssig zu erfassen. Das Zahnglied 423 ist bezüglich der Mittellängsebene 421 spiegelsymmetrisch ausgebildet Das Zahnglied 423 umfasst einen Erfassungsabschnitt 424 zum Erfassen des Baumstammes 20 und einen Zapfen 427. Der Erfassungsabschnitt 424 ist an den Baumstamm 20 anlegbar. Der Erfassungsabschnitt 424 weist sechs Zähne 425 auf. Die Zähne 425 sind in drei Paaren i = 1, 2, 3 zusammengefasst.

Die Zähne 425 sind im Wesentlichen dreieckförmig ausgebildet und weisen eine Höhe hᵢ auf. Die Zahnpaare weisen einen Abstand dᵢ auf, wobei i = 1, 2, 3 der Index des betreffenden Zahnpaares ist. Die Zahnhöhe hᵢ und der Zahnabstand dᵢ nehmen zu der Mittelquerebene 422 hin ab. Demnach gilt h₁ > h₂ > h₃ und d₁ > d₂ > d₃. Der Zapfen 427 springt entgegen der Zähne 425 vor.

Das Stützglied 426 ist zylinderförmig ausgebildet und weist zwei Auflageringe 429 auf. Das Stützglied 426 ist ausgebildet, einen Anschlagvorsprung 415 zu erfassen. Die Auflageringe 429 sind zwischen den Zahngliedern 423 in einem Abstand voneinander angeordnet.

Der Stützring 430 ist ein kreisringförmiges, elastisch verformbares Band aus Gummi, das dem Erzeugen einer Rückstellkraft dient. Der Stützring 430 hat einen Auflagebereich 431 zum Anlegen an eine Umfangsplatte 416.

Im zusammengesetzten Zustand der Vorschubwalze 400 sind die Vorsprünge 419 in den Öffnungen 413 aufgenommen. Die Umfangsplatten 416 bilden die Umfangsfläche des Walzenkörpers 410. Der Stützring 430 ist zwischen der Grundplatte 411 und der Deckplatte 412 anliegend angeordnet. Der Auflagebereich 431 berührt die Umfangsplatten 416 zumindest teilweise. Ferner bildet der Stützring 430 einen Hohlraum 432 mit der Umfangsplatte 416. Je zwei Umfangsplatten 416 bilden die Befestigungsöffnung 417 und die Zapfenöffnungen 418. Die Vorschubelemente 420 sind mit den Zapfen 427 in den Zapfenöffnungen 418 angeordnet und mittels Bolzen 428 befestigt. Wo nötig sind die Bauteile verschweißt.

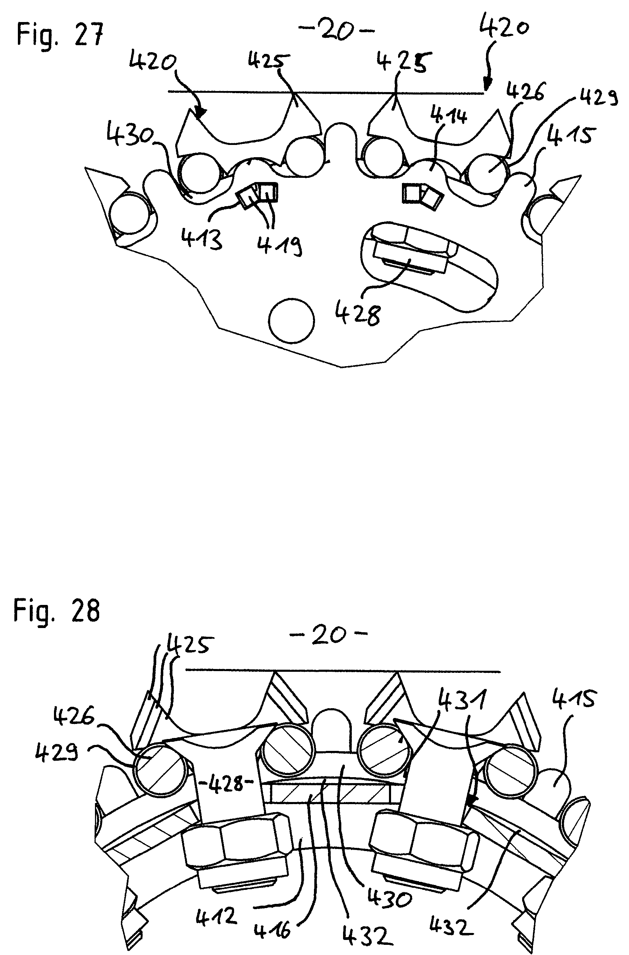

Die Funktionsweise der Vorschubwalze 400 wird anhand der Figuren 27 und 28 erläutert. Mindestens zwei Zähne 425 erfassen formschlüssig den Baumstamm 20. Die Anpresskraft wirkt auf zwei Vorschubelemente 420. Die Vorschubwalze 400 dreht entgegen dem Uhrzeigersinn.

Es wird zunächst das in den Figuren links dargestellte Vorschubelement 420 diskutiert. Das linke Stützglied 426 liegt weder an der Grundplatte 411, der Deckplatte 412 noch dem Anschlagvorsprung 415 an. Das rechte Stützglied 426 liegt an der Grundplatte 411, der Deckplatte 412 und dem Anschlagvorsprung 415 an. Zudem wird der Stützring 430 verformt, so dass eine Rückstellkraft auf das Vorschubelement 420 wirkt. Die Rückstellkraft drängt das Vorschubelement 420 entgegen dem Uhrzeigersinn.

Nachfolgend wird das in den Figuren rechts dargestellte Vorschubelement 420 diskutiert. Das linke Stützglied 426 liegt nicht an dem Anschlagvorsprung 415 an. Das linke Stützglied 426 liegt an der Grundplatte 411 und der Deckplatte 412 an. Zudem wird der Stützring 430 verformt, so dass eine Rückstellkraft auf das Vorschubelement 420 wirkt. Die Rückstellkraft drängt das Vorschubelement 420 im Uhrzeigersinn. Das rechte Stützglied 426 liegt weder an der Grundplatte 411 noch der Deckplatte 412 an. Das rechte Stützglied 426 liegt an dem Anschlagvorsprung 415 an.

Die Vorschubelemente 420 führen während der Drehbewegung der Vorschubwalze 400 beständig eine Kippbewegung aus und passen sich an die Beschaffenheit des Baumstammes 20 an. Das Drehmoment des Antriebs wird über die Anschlagvorsprünge 415 und Stützglieder 426 auf den Erfassungsabschnitt 424 übertragen. Ein zuverlässiger Transport des Baumstammes 20 wird ermöglicht.

### Bezugszeichenliste

- 10: Greifzange

- 20: Baumstamm
- 21: Ast

- 30: Rahmen
- 31: Befestigungsplatte
- 32: Kupplungsöffnung
- 33: Befestigungsöffnung
- 34: Entastungseinheit
- 35: starres Entastungsmesser
- 36: bewegliches Entastungsmesser
- 37: Symmetrieebene

- 40: erste Greifzangenhälfte
- 41: zweite Greifzangenhälfte
- 42: Greifeinheit
- 43: Antriebseinheit
- 44: Entastungseinheit
- 45: Vorschubeinheit
- 46: Abdeckung

- 100: erster Greifschenkel

- 110: Seitenplatte
- 111: Antriebsöffnung
- 112: Stiftöffnung
- 113: Anschlagöffnung
- 114: Befestigungsöffnung
- 115: Gleitöffnung
- 116: erste Lageröffnung
- 117: zweite Lageröffnung
- 118: erste Drehachse
- 119: zweite Drehachse

- 120: Greifbacke
- 121: gekrümmter Bereich
- 122: Spitze
- 123: erster Schrägbereich
- 124: zweiter Schrägbereich
- 125: erster Übergangsbereich
- 126: zweiter Übergangsbereich
- 127: Greiffläche

- 130: Beschlag
- 131: gekrümmter Bereich
- 132: Spitze
- 133: erster Schrägbereich
- 134: zweiter Schrägbereich
- 135: erster Übergangsbereich

- 138: Krafteinleitungsbereich
- 139: Anschlagbereich

- 140: zweiter Greifschenkel

- 145: Trägerplatte
- 146: Zwischenraum
- 150: Seitenplatte

- 154: Befestigungsöffnung
- 155: Gleitöffnung
- 156: erste Lageröffnung

- 160: Greifbacke
- 161: gekrümmter Bereich
- 162: Spitze
- 163: erster Schrägbereich
- 164: zweiter Schrägbereich
- 165: erster Übergangsbereich
- 166: zweiter Übergangsbereich
- 167: Greiffläche

- 170: Rahmenelement
- 171: gekrümmter Bereich
- 172: Spitze
- 173: erster Schrägbereich
- 174: zweiter Schrägbereich
- 175: erster Übergangsbereich
- 176: zweiter Übergangsbereich
- 177: Greififläche

- 200: Hydraulikzylinder
- 201: erste Befestigungsöffnung
- 202: zweite Befestigungsöffnung
- 203: Befestigungsbolzen

- 204: Verbindungsstab

- 210: Zugmittelgetriebe
- 211: Zugmittel
- 212: Endabschnitt
- 213: Bolzen kette
- 214: Flyerkette

- 215: Abrollglied
- 216: Abrollfläche
- 217: Abrollsegment
- 218: Stift

- 220: Befestigungsglied
- 221: Befestigungsflansch
- 222: Zuganker
- 223: Gewinde
- 224: Mutter
- 225: Kontermutter
- 226: Spannelement

- 227: Druckdämpfungsglied
- 228: Tellerfederpaket
- 229: Tellerfeder

- 230: Entastungsmesser
- 231: Grundplatte
- 232: Kraftübertragungsfläche
- 233: Klingenblatt
- 234: Schneide
- 235: Schneidkante
- 236: Fehlschärfe
- 237: Gleitfläche
- 238: erstes Kraftumlenkelement
- 239: zweites Kraftumlenkelement
- 240: Umlenkbereich
- 241: Stützzylinder
- 250: Rückstellglied
- 251: erster Befestigungsbolzen
- 252: zweiter Befestigungsbolzen
- 253: Rückstellelement
- 254: Druckfeder
- 255: Schutzabdeckung
- 256: Schutzrohr

- 300: Rahmen
- 301: Mittelstellung
- 302: Dämpfungselement

- 400: Vorschubwalze

- 410: Walzenkörper
- 411: Grundplatte
- 412: Deckplatte
- 413: Öffnung
- 414: Abrollvorsprung
- 415: Anschlagvorsprung
- 416: Umfangsplatte
- 417: Befestigungsöffnung
- 418: Zapfenöffnung
- 419: Vorsprung

- 420: Vorschubelement
- 421: Mittellängsebene
- 422: Mittelquerebene
- 423: Zahnglied
- 424: Erfassungsabschnitt
- 425: Zahn
- 426: Stützglied
- 427: Zapfen
- 428: Bolzen
- 429: Auflagering

- 430: Stützring
- 431: Auflagebereich
- 432: Hohlraum

- α: Winkel

- dᵢ: Zahnabstand
- hᵢ: Zahnhöhe

- axial: axiale Richtung
- F_{R}: Rückstellkraft
- w: Öffnungsweite

## Patentansprüche

1. Greifzange (10) zum Entasten und Transportieren eines Baumstammes (20), umfassend:
einen Rahmen (30), der sich in einer axialen Richtung erstreckt;
wenigstens einen Greifschenkel (100, 140), der um eine erste Drehachse (118) schwenkbar an dem Rahmen (30) gelagert ist und eine Greifbacke (120) zum Halten des Baumstammes (20) aufweist;
wenigstens ein Entastungsmesser (230), das eine Schneide (234) zum Abscheren von Ästen (21) beim Bewegen des Baumstammes (20) in der axialen Richtung aufweist, und
wenigstens eine Vorschubeinheit (45) zum Bewegen des Baumstammes (20) in der axialen Richtung,
**dadurch gekennzeichnet, dass** das Entastungsmesser (230) beweglich an dem Greifschenkel (100) angeordnet und entgegen der Wirkung einer Rückstellkraft (F_{R}) von einer ersten Stellung in eine zweite Stellung relativ zu dem Greifschenkel (100) bewegbar ist.

2. Greifzange (10) nach Anspruch 1, **dadurch gekennzeichnet, dass** das Entastungsmesser (230) um die erste Drehachse (118) schwenkbar angeordnet ist.

3. Greifzange (10) nach Anspruch 1 oder 2, **gekennzeichnet durch** ein Rückstellglied (250) mit einem Rückstellelement (253), insbesondere einer Druckfeder (254), zum Erzeugen der Rückstellkraft (F_{R}).

4. Greifzange (10) nach dem Oberbegriff des Anspruchs 1 oder nach einem der Ansprüche 1 bis 3, **gekennzeichnet durch** einen ersten Greifschenkel (100) und einen zweiten Greifschenkel (140), wobei insbesondere der erste Greifschenkel (100) und der zweite Greifschenkel (140) in der axialen Richtung beabstandet sind und wobei insbesondere die Vorschubeinheit (45) in der axialen Richtung zwischen dem ersten Greifschenkel (100) und dem zweiten Greifschenkel (140) angeordnet ist.

5. Greifzange (10) nach Anspruch 4, **dadurch gekennzeichnet, dass** die Vorschubeinheit (45) um eine zweite Drehachse (119) relativ zu dem Greifschenkel (100, 140), vorzugsweise in einem Winkelbereich von ±15°, insbesondere ±5°, um eine Mittelstellung (301) drehbar gelagert ist und wobei vorzugsweise eine auf die Vorschubeinheit (45) ausgeübte Kraft eine Drehbewegung um die zweite Drehachse (119) hervorruft.

6. Greifzange (10) nach Anspruch 4 oder 5, **gekennzeichnet durch** eine Abdeckung (46), die an den Greifschenkeln (100, 140) angeordnet ist und die sich vorzugsweise zwischen dem ersten Greifschenkel (100) und dem zweiten Greifschenkel (140) erstreckt.

7. Greifzange (10) nach einem der Ansprüche 4 bis 6, **dadurch gekennzeichnet, dass** die Vorschubeinheit (45) eine Vorschubwalze (400), die insbesondere zwischen dem ersten Greifschenkel (100) und dem zweiten Greifschenkel (140) angeordnet ist, umfasst.

8. Greifzange (10) nach Anspruch 7, **dadurch gekennzeichnet, dass** die Vorschubwalze (400) einen Walzenkörper (410), ein Vorschubelement (420), das geeignet ist, den Baumstamm (20) formschlüssig zu erfassen, und einen Stützring (430), der an einer Umfangsfläche des Walzenkörpers (410) anliegt, der elastisch verformbar ist und der geeignet ist, auf das Vorschubelement (420) eine Rückstellkraft auszuüben, umfasst.

9. Greifzange (10) nach dem Oberbegriff des Anspruchs 1 oder nach einem der Ansprüche 1 bis 8, **gekennzeichnet durch** ein Zugmittelgetriebe (210) zur Synchronisierung der Schwenkbewegung der Greifschenkel (100, 140), das umfasst:
ein Abrollglied (215), das mit dem Greifschenkel (100, 140) gekoppelt ist und das eine Abrollfläche (216) aufweist;
ein an der Abrollfläche (216) anlegbares Zugmittel (211), das einen Endabschnitt (212) aufweist, und
ein Befestigungsglied (220) zur Befestigung des Endabschnitts (212), das an dem Greifschenkel (100) und/oder der Trägerplatte (145) zum Einstellen der Spannung des Zugmittels (211) angeordnet ist.

10. Greifzange (10) nach Anspruch 9, **dadurch gekennzeichnet, dass** das Befestigungsglied (220) einen Befestigungsflansch (221), der an dem Greifschenkel (100) und/oder an der Trägerplatte (145) befestigt ist, einen Zuganker (222), der an dem Befestigungsflansch (221) gelagert ist und der zum Befestigen des Endabschnitts (212) geeignet ist, und ein Spannelement (226) zum Einstellen der Spannung des Zugmittels (211), aufweist, wobei vorzugsweise das Befestigungsglied (220) insbesondere ein Druckdämpfungsglied (227), das vorzugsweise eine Tellerfeder (229) umfasst, aufweist, wobei vorzugsweise das Druckdämpfungsglied (227), insbesondere die Tellerfeder (229), zwischen dem Spannelement (226) und dem Befestigungsflansch (221) an dem Zuganker (222) angeordnet ist.

11. Greifzange (10) nach Anspruch 9 oder 10, **dadurch gekennzeichnet, dass** das Abrollglied (215) ein Abrollsegment (217), das die Abrollfläche (216) aufweist, und eine Mehrzahl von Stiften (218) zum Stützen des Abrollsegments (217) umfasst, wobei vorzugsweise die Abrollfläche (216) bogenförmig gekrümmt ist.

12. Greifzange (10) nach einem der Ansprüche 1 bis 11, **dadurch gekennzeichnet, dass** der Rahmen (30) eine Symmetrieebene (37) aufweist, zu der die Greifzange (10) in der axialen Richtung betrachtet wenigstens teilweise symmetrisch ausgebildet ist.

13. Rückezug, **gekennzeichnet durch** eine Greifzange (10) nach einem der Ansprüche 1 bis 12.

14. Vollernteaggregat zum Ernten von Holz, **gekennzeichnet durch**
eine Fälleinheit, die zum Fällen von Bäumen geeignet ist und die insbesondere eine Säge oder eine Schneide umfasst, und
eine Greifzange (10) nach einem der Ansprüche 1 bis 12.

15. Holzvollernter, **gekennzeichnet durch** ein Vollernteaggregat nach Anspruch 14.

## Claims

1. Gripping tongs (10) for limbing and transporting a tree trunk (20), comprising:
a frame (30), which extends into an axial direction;
at least one gripping bracket (100, 140), which is mounted on the frame (30) pivotably around a first rotation axis (118) and has a gripping jaw (120) for sustaining the tree trunk (20);
at least one limbing knife (230), which has a blade (234) for shearing branches (21) when moving the tree trunk (20) in the axial direction, and
at least one feed unit (45) for moving the tree trunk (20) in the axial direction, **characterized in that** the limbing knife (230) is arranged on the gripping bracket (100) in a movable manner and is movable relative to the gripping bracket (100) from a first position into a second position against the effect of a reset force (F_{R}).

2. The gripping tongs (10) according to claim 1, **characterized in that** the limbing knife (230) is arranged pivotably around the first rotation axis (118).

3. The gripping tongs (10) according to claim 1 or 2, **characterized by** a reset member (250) having a reset element (253), in particular a pressure spring (254), for generating the reset force (F_{R}).

4. The gripping tongs (10) according to the preamble of claim 1 or according to any of claims 1 to 3, **characterized by** a first gripping bracket (100) and a second gripping bracket (140), in particular the first gripping bracket (100) and the second gripping bracket (140) being spaced apart in axial direction and in particular the feed unit (45) being arranged in axial direction between the first gripping bracket (100) and the second gripping bracket (140).

5. The gripping tongs (10) according to claim 4, **characterized in that** the feed unit (45) is arranged rotatably around a second rotation axis (119) relative to the gripping bracket (100, 140), preferably in an angular range of ±15°, in particular ±5°, around a centre position (301), preferably a force acted upon the feed unit (45) generating a rotational motion around the second rotation axis (119).

6. The gripping tongs (10) according to claim 4 or 5, **characterised by** a cover (46), which is arranged at the gripping brackets (100, 140) and preferably extends between the first gripping bracket (100) and the second gripping bracket (140).

7. The gripping tongs (10) according to any of claims 4 to 6, **characterised in that** the feed unit (45) comprises a feed roll (400), which in particular is arranged between the first gripping bracket (100) and the second gripping bracket (140).

8. The gripping tongs (10) according to claim 7, **characterised in that** the feed roll (400) comprises a roll body (410), a feed element (420), which is adapted for encompassing the tree trunk (20) in a form-fitting manner, and a supporting ring (430), which abuts on a circumferential surface of the roll body (410), which is elastically deformable and is adapted to exert a reset force on the feed element (420).

9. The gripping tongs (10) according to the preamble of claim 1 or according to any of claims 1 to 8, **characterized by** a traction drive (210) for synchronisation of the pivoting of the gripping brackets (100, 140), which comprises:
a roll-off member (215) which is coupled with the gripping bracket (100, 140) and has a roll-off surface (216);
a traction means (211) mountable on the roll-off surface (216), which has an end portion (212), and
a fastening member (220) for fastening the end portion (212), which is arranged at the gripping bracket (100) and/or the supporting plate (145) for adjusting the tension of the traction means (211).

10. The gripping tongs (10) according to claim 9, **characterized in that** the fastening member (220) has a fastening flange (221), which is connected to the gripping bracket (100) and/or the supporting plate (145), a tension rod (222), which is mounted on the fastening flange (221) and suitable for fastening the end portion (212), and a tensioning element (226) for adjusting the tension of the traction means (211), preferably the fastening member (220) particularly having a pressure absorbing member (227), which preferably comprises a disc spring (229), the pressure absorbing member (227), in particular the disc spring (229), preferably being arranged between the tensioning element (226) and the fastening flange (221) on the tension rod (222).

11. The gripping tongs (10) according to claim 9 or 10, **characterized in that** the roll-off member (215) comprises a roll-off segment (217), which has the roll-off surface (216), and a plurality of pins (218) for supporting the roll-off segment (217), the roll-off surface (216) preferably being curved in an arc shape.

12. The gripping tongs (10) according to any of the claims 1 to 11, **characterized in that** the frame (30) has a symmetrical plane (37) to which, viewed in the axial direction, the gripping tongs (10) are formed at least partially symmetrical.

13. A forwarder, **characterized by** the gripping tongs (10) according to any of the claims 1 to 12.

14. A harvester unit for harvesting wood **characterised by** a felling unit, which is adapted for felling trees and which in particular comprises a saw or a blade, and gripping tongs (10) according to any of the claims 1 to 12.

15. A Harvester, **characterised by** a harvester unit according to claim 14.

## Revendications

1. Pince de préhension (10) pour ébrancher et transporter un tronc d'arbre (20), incluant:
un cadre (30), qui s'étend dans une direction axiale;
au moins un bras de préhension (100, 140), qui est monté sur le cadre (30) avec possibilité de pivoter autour d'un premier axe de rotation (118) et comprend une mâchoire de préhension (120) pour tenir le tronc d'arbre (20);
au moins un couteau d'ébranchage (230) qui comporte un tranchant (234) pour cisailler des branches (21) en déplaçant le tronc d'arbre (20) dans la direction axiale, et
au moins une unité d'avance (45) pour déplacer le tronc d'arbre (20) dans la direction axiale,
**caractérisée en ce que** le couteau d'ébranchage (230) est agencé déplaçable sur le bras de préhension (100) et est déplaçable à l'encontre de l'effet d'une force de rappel (F_{R}) depuis une première position jusque dans une seconde position par rapport au bras de préhension (100).

2. Pince de préhension (10) selon la revendication 1, **caractérisée en ce que** le couteau d'ébranchage (230) est agencé avec possibilité de pivoter autour du premier axe de rotation (118).

3. Pince de préhension (10) selon la revendication 1 ou 2, **caractérisée par** un organe de rappel (250) avec un élément de rappel (253), en particulier un ressort de compression (254), pour engendrer la force de rappel (F_{R}).

4. Pince de préhension (10) selon le préambule de la revendication 1 ou selon l'une des revendications 1 à 3, **caractérisée par** un premier bras de préhension (100) et un second bras de préhension (140), dans laquelle en particulier le premier bras de préhension (100) et le second bras de préhension (140) sont écartés dans la direction axiale et dans laquelle en particulier l'unité d'avance (45) est agencée en direction axiale entre le premier bras de préhension (100) et le second bras de préhension (140).

5. Pince de préhension (10) selon la revendication 4, **caractérisée en ce que** l'unité d'avance (45) est montée en rotation autour d'un second axe de rotation (119) par rapport au bras de préhension (100, 140), de préférence dans une plage angulaire de ± 15°, en particulier ± 5°, autour d'une position médiane (301), et dans laquelle de préférence une force exercée sur l'unité d'avance (45) provoque un mouvement de rotation autour du second axe de rotation (119).

6. Pince de préhension (10) selon la revendication 4 ou 5, **caractérisée par** un recouvrement (46), qui est agencé sur les bras de préhension (100, 140) et qui s'étend de préférence entre le premier bras de préhension (100) et le second bras de préhension (140).

7. Pince de préhension (10) selon l'une des revendications 4 à 6, **caractérisée en ce que** l'unité d'avance (45) inclut un cylindre d'avance (400), qui est agencé en particulier entre le premier bras de préhension (100) et le second bras de préhension (140).

8. Pince de préhension (10) selon la revendication 7, **caractérisée en ce que** le cylindre d'avance (400) inclut un corps de cylindre (410), un élément d'avance (420), qui convient à saisir le tronc d'arbre (20) par coopération de formes, et une bague de soutien (430), qui s'applique sur une surface périphérique du corps de cylindre (410), qui est déformable élastiquement, et qui convient pour exercer une force de rappel sur l'élément d'avance (420).

9. Pince de préhension (10) selon le préambule de la revendication 1 ou selon l'une des revendications 1 à 8, **caractérisée par** un mécanisme à organe de traction (210) pour synchroniser le mouvement de pivotement des bras de préhension (100, 140), qui inclut:
un organe de roulement (215), qui est couplé avec le bras de préhension (100, 140) et qui présente une surface de roulement (216);
un organe de traction (211), susceptible d'être appliqué sur la surface de roulement (216), qui comprend un tronçon terminal (212), et
un organe de fixation (220) pour la fixation du tronçon terminal (212), qui est agencé sur le bras de préhension (100) et/ou sur la plaque porteuse (145) pour régler la tension de l'organe de traction (211).

10. Pince de préhension (10) selon la revendication 9, **caractérisée en ce que** l'organe de fixation (220) comprend une bride de fixation (221), qui est fixée sur le bras de préhension (100) et/ou sur la plaque porteuse (145), un ancrage de traction (222), qui est monté sur la bride de fixation (221) et qui convient à fixer le tronçon terminal (212), et un élément de serrage (226) pour régler la tension de l'organe de traction (211), dans laquelle de préférence l'organe de fixation (220) inclut en particulier un organe d'amortissement de pression (227), qui inclut de préférence une rondelle-ressort (229), dans laquelle de préférence l'organe d'amortissement de pression (227), en particulier la rondelle-ressort (229), est agencé(e) entre l'élément de serrage (226) et la bride de fixation (221) sur l'ancrage de traction (222).

11. Pince de préhension (10) selon la revendication 9 ou 10, **caractérisé en ce que** l'organe de roulement (215) inclut un segment de roulement (217), qui comporte la surface de roulement (216), et une pluralité de tiges (218) pour soutenir le segment de roulement (217), dans laquelle de préférence la surface de roulement (216) est incurvée en forme d'arc.

12. Pince de préhension (10) selon l'une des revendications 1 à 11, **caractérisé en ce que** le cadre (30) présente un plan de symétrie (37) par rapport auquel la pince de préhension (10) est réalisée au moins partiellement symétrique lorsqu'on l'observe en direction axiale.

13. Machine de récolte, **caractérisée par** une pince de préhension (10) selon l'une des revendications 1 à 12.

14. Appareil de récolte complet pour récolter du bois, **caractérisé par**
une unité d'abattage, qui convient pour l'abattage d'arbres et qui inclut en particulier une scie ou un tranchant, et
une pince de préhension (10) selon l'une des revendications 1 à 12.

15. Machine de récolte de bois **caractérisée par** un appareil de récolte complet selon la revendication 14.
